(19) Europäisches Patentamt

European Patent Office

Office européen des brevets

(11) **EP 4 087 341 A1**

(12) # EUROPEAN PATENT APPLICATION
published in accordance with Art. 153(4) EPC

(43) Date of publication:
**09.11.2022 Bulletin 2022/45**

(21) Application number: **20918985.1**

(22) Date of filing: **10.02.2020**

(51) International Patent Classification (IPC):
**H04W 68/00** (2009.01)

(52) Cooperative Patent Classification (CPC):
**H04W 68/00;** Y02D 30/70

(86) International application number:
**PCT/CN2020/074648**

(87) International publication number:
**WO 2021/159244 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **XIE, Zonghui
Shenzhen, Guangdong 518129 (CN)**

• **CHEN, Lei
Shenzhen, Guangdong 518129 (CN)**
• **LI, Bingzhao
Shenzhen, Guangdong 518129 (CN)**
• **WANG, Yan
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PAGING METHOD AND DEVICE**

(57) A paging method and apparatus that are applicable to a communication system are disclosed. Corresponding paging configuration information is set for different types of terminal devices, to ensure that the different types of terminal devices participate in a paging process by using the corresponding paging configuration information. This avoids unnecessary frequent wake-up and frequent reading of SIB1 information, and further reduces energy consumption of the terminal devices. The method includes: A network device sends first paging configuration information, where the first paging configuration information corresponds a first-type terminal device; and sends second paging configuration information, where the second paging configuration information corresponds to a second-type terminal device. A capability of the first-type terminal device is different from a capability of the second-type terminal device. The second-type terminal device receives the second paging configuration information; and receives paging downlink control information DCI based on the second paging configuration information.

Network device | First-type terminal device | Second-type terminal device

S301: First paging configuration information

S302: Second paging configuration information

S303: Paging downlink control information paging DCI

Paging downlink control information paging DCI

FIG. 3

**Description**

**TECHNICAL FIELD**

This application relates to the field of wireless communication technologies, and in particular, to a paging method and apparatus.

**BACKGROUND**

A terminal device wakes up in a specific time period, to receive paging (paging) downlink control information (downlink control information, DCI). The paging DCI is used to notify the terminal device to obtain updated system information or indicate that there is paging scheduling information for the terminal device. The terminal device parses the paging DCI. Then, based on the indication of the paging DCI, the terminal device obtains the updated system information, reads content of a paging message on a physical downlink shared channel (physical downlink shared channel, PDSCH) resource indicated by the paging DCI, or perform other processing.

In a conventional technology, same paging configuration information is used for different types of terminal devices. However, the different types of terminal devices have different capabilities. For example, the different types of terminal devices have different paging probabilities. As a result, a terminal device with a low paging probability is frequently woken up, causing high energy consumption. For another example, the different types of terminal devices require different system information, and a terminal device needs to read a specific field in a system information block type 1 (System information block type 1, SIB1) to determine whether updated system information is required by the terminal device. For a terminal device that requires little system information, the terminal device needs to frequently read a SIB1 to determine whether system information required by the terminal device is updated. Consequently, frequent reading also causes a problem of high energy consumption. In conclusion, when the same paging configuration information is used for the different types of terminal devices, the problem of high energy consumption may be caused.

**SUMMARY**

This application provides a paging method and apparatus, to resolve a problem of excessively high energy consumption caused because same paging configuration information is configured for different types of terminal devices.

According to a first aspect, an embodiment of this application provides a paging method. The method includes: A network device sends first paging configuration information, where the first paging configuration information corresponds a first-type terminal device. The first-type terminal device receives the first paging configuration information. The network device sends second paging configuration information, where the second paging configuration information corresponds to a second-type terminal device. The second-type terminal device receives the second paging configuration information. A capability of the first-type terminal device is different from a capability of the second-type terminal device. The first-type terminal device receives paging DCI based on the first paging configuration information. The second-type terminal device receives paging DCI based on the second paging configuration information.

The paging method described in this application may be implemented by the network device or a terminal device, or may be implemented by a component, for example, a processing chip or a circuit, in the network device or the terminal device. According to the foregoing method, the network device separately performs paging configuration and separately indicates paging DCI for different types of terminal devices. Therefore, when receiving an indication of the paging DCI based on corresponding paging configuration information, the terminal device performs a step such as obtaining system information or reading content of a paging message, to prevent the terminal device from being frequently woken up and frequently reading SIB 1 information. This reduces energy consumption in a paging process, and achieves an objective of energy saving.

In a possible design, a capability of a terminal device includes one or more of the following: a maximum transmission bandwidth, a transmission rate, reliability, delay tolerance, a quantity of antennas, or standby time.

In the foregoing design, capabilities of the different types of terminal devices are different. The network device may separately perform paging configuration and separately indicate the paging DCI for the different types of terminal devices, to reduce the energy consumption in the paging process, and achieve the objective of energy saving.

In a possible design, the method further includes: The network device sends first paging DCI. The first paging DCI includes an indication information set, the indication information set includes at least one piece of indication information, the at least one piece of indication information is used to identify whether a corresponding system information block SIB group changes, and a change of the SIB group includes a change of any SIB in the SIB group.

Optionally, the network device may obtain, through division, a SIB group based on a type of a terminal device. For example, the network device obtains, through division, a SIB group corresponding to the first-type terminal device and a SIB group corresponding to the second-type terminal device. Alternatively, the network device may obtain, through division, a SIB group based on a service requirement. For example, the network device obtains, through division, a SIB group corresponding to a first service, a SIB group corresponding to a second service, and a SIB group corresponding to a third service.

It may be understood that each type of terminal device may correspond to one or more SIB groups. For example, when the network device obtains, through division, the SIB group based on the service requirement, the first-type terminal device may correspond to the SIB group of the first service and the SIB group of the second service, and the second-type terminal device may correspond to the SIB group of the third service.

In the foregoing design, the network device may indicate, by using the paging DCI, whether a SIB group corresponding to a terminal device changes, so that a terminal device whose corresponding SIB group changes can obtain system information, and a terminal device whose corresponding SIB group does not change may skip a step such as obtaining system information. Therefore, the energy consumption in the paging process is reduced.

In a possible design, the method further includes: The network device sends first information. The first information is used to indicate a SIB group corresponding to the second-type terminal device.

In the foregoing design, the network device sends the first information used to indicate the SIB group of the second-type terminal device. When the SIB group corresponding to the second-type terminal device changes, the second-type terminal device needs to obtain system information. When the SIB group corresponding to the second-type terminal device does not change, the second-type terminal device may skip a step such as obtaining the system information, to reduce the energy consumption in the paging process.

In a possible design, the method further includes: The network device sends second paging DCI. The second paging DCI includes second information. The second paging DCI corresponds to the second-type terminal device. The second information is used to notify the second-type terminal device to obtain updated system information or indicate that there is paging scheduling information for the second-type terminal device.

When the second information indicates that there is the paging scheduling information for the second-type terminal device, the second information indicates the second-type terminal device to read content of a paging message on a PDSCH resource indicated by the second paging DCI.

In the foregoing design, by using the paging DCI, the network device may directly notify the second-type terminal to obtain the updated system information or indicate that there is the paging scheduling information for the second-type terminal device. The second-type terminal device needs to obtain the updated system information or read the content of the paging message. However, a terminal device that is not the second-type terminal device may skip a step such as obtaining the system information or reading the content of the paging message, to reduce the energy consumption in the paging process.

In a possible design, the second paging DCI is carried on a first physical downlink control channel PDCCH, the first PDCCH is scrambled by using a first paging radio network temporary identifier P-RNTI, and the first P-RNTI corresponds to the second-type terminal device; and/or a format of the second paging DCI corresponds to the second-type terminal device; and/or the second information is indicated by using a reserved field.

In the foregoing design, by using the paging DCI, the network device may explicitly or implicitly notify the second-type terminal to obtain the updated system information or indicate that there is the paging scheduling information for the second-type terminal device. The second-type terminal device needs to obtain the updated system information or read the content of the paging message. However, a terminal device that is not the second-type terminal device may skip the step such as obtaining the system information or reading the content of the paging message, to reduce the energy consumption in the paging process.

In a possible design, the second paging configuration information further includes third information. The third information is used to indicate a radio transmission resource corresponding to a terminal device, and the radio transmission resource includes one or more of a time domain resource, a frequency domain resource, or a code domain resource.

In the foregoing design, the network device configures different radio transmission resources for the different types of terminal devices, to send the paging DCI on a radio transmission resource corresponding to the second-type terminal device. The second-type terminal device needs to obtain the updated system information and/or read the content of the paging message. However, a terminal device that is not the second-type terminal device may skip the step such as obtaining the system information and/or reading the content of the paging message, to reduce the energy consumption in the paging process.

In a possible design, the radio transmission resource includes a search space Search Space, a control resource set CORESET, and/or a P-RNTI.

In a possible design, the method further includes: The network device sends third paging DCI based on the radio transmission resource corresponding to the second-type terminal device.

In the foregoing design, the network device may send the paging DCI on the radio transmission resource corresponding to the second-type terminal device. The second-type terminal device needs to obtain the updated system information or read the content of the paging message. However, a terminal device that is not the second-type terminal device may skip the step such as obtaining the system information or reading the content of the paging message, to reduce the energy consumption in the paging process.

In a possible design, the method further includes: The network device sends fourth information. The fourth information is used to indicate that there is fourth paging DCI on a first paging occasion PO. The fourth paging DCI is used to notify the second-type terminal device to obtain the updated system information or indicate that there is the paging scheduling information for the second-type terminal device.

In the foregoing design, the network device may send the fourth information, to notify the second-type terminal device that there is the subsequent paging DCI. If the fourth information received by the terminal device does not indicate that there is the subsequent paging DCI, the terminal device may not monitor the paging DCI, to reduce the energy consumption in the paging process.

In a possible design, the network device may further send fifth information. The fifth information may be used to indicate some information related to the fourth information, for example, a time-frequency resource corresponding to the fourth information and/or one or more POs on which the terminal device monitors the paging DCI.

For example, the terminal device may monitor the fourth information at a position of a time domain resource indicated by the fifth information. The terminal device may monitor one or more corresponding POs indicated by the fifth information.

According to a second aspect, an embodiment of this application further provides a paging method. The method includes: A second-type terminal device receives second paging configuration information. The second paging configuration information corresponds to the second-type terminal device. The second-type terminal device receives fifth paging DCI based on the second paging configuration information.

In a possible design, the fifth paging DCI includes an indication information set, the indication information set includes at least one piece of indication information, the at least one piece of indication information is used to identify whether a corresponding system information block SIB group changes, and a change of the SIB group includes a change of any SIB in the SIB group.

In a possible design, the method further includes: The second-type terminal device receives first information. The first information is used to indicate a SIB group corresponding to the second-type terminal device.

In a possible design, the fifth paging DCI includes second information. The second paging DCI corresponds to the second-type terminal device. The second information is used to notify the second-type terminal device to obtain updated system information or indicate that there is paging scheduling information for the second-type terminal device.

In a possible design, the fifth paging DCI is carried on a first physical downlink control channel PDCCH, the first PDCCH is scrambled by using a first paging radio network temporary identifier P-RNTI, and the first P-RNTI corresponds to the second-type terminal device; and/or a format of the fifth paging DCI corresponds to the second-type terminal device; and/or the fifth information is indicated by using a reserved field.

In a possible design, the second paging configuration information further includes third information. The third information is used to indicate a radio transmission resource corresponding to a terminal device, and the radio transmission resource includes one or more of a time domain resource, a frequency domain resource, or a code domain resource.

In a possible design, the radio transmission resource includes a search space, a CORESET, and/or a P-RNTI.

In a possible design, that the second-type terminal device receives fifth paging DCI based on the second paging configuration information includes: The second-type terminal device receives the fifth paging DCI based on a radio transmission resource corresponding to the second paging configuration information.

In a possible design, the method further includes: The second-type terminal device receives fourth information. The fourth information is used to indicate that there is the fifth paging DCI on a first paging occasion PO. The fifth paging DCI is used to notify the second-type terminal device to obtain the updated system information and/or indicate that there is the paging scheduling information for the second-type terminal device.

That the second-type terminal device receives fifth paging DCI based on the second paging configuration information includes: The second-type terminal device receives the fifth paging DCI on the first PO based on the second paging configuration information.

In a possible design, the method further includes: The second-type terminal device receives fifth information. The fifth information may be used to indicate some information related to the fourth information, for example, a time-frequency resource corresponding to the fourth information and/or one or more POs on which the terminal device monitors the paging DCI.

For example, the terminal device may monitor the fourth information at a position of a time domain resource indicated by the fifth information. The terminal device may monitor one or more corresponding POs indicated by the fifth information.

According to a third aspect, an embodiment of this application further provides a paging apparatus. The paging apparatus is configured to perform the method in any one of the first aspect, the second aspect, the possible designs of the first aspect, or the possible designs of the second aspect. Specifically, the paging apparatus may include a unit (module) configured to perform the method in any one of the first aspect, the second aspect, the possible designs of the first aspect, or the possible designs of the second aspect. For example, the paging apparatus includes a processing unit and a transceiver unit. For example, the transceiver unit may include a sending unit and a receiving unit. The sending unit and the receiving unit may be different functional units, or may be a same functional unit that can implement different functions. For example, the paging apparatus is a communication device, or a chip or another component disposed in a communication device. For example, the communication device is a network device or a terminal device. The following uses an example in which the paging apparatus is a network device or a terminal device. For example, the transceiver unit may alternatively be implemented as a transceiver, and the processing unit may alternatively be implemented as a processor. Alternatively, the sending unit may be implemented as a transmitter, and the receiving unit may be implemented as a receiver. The transmitter and the receiver may be different functional units, or may be a same functional unit that can implement different functions. If the paging apparatus is a communication device, the transceiver is implemented as, for example, an antenna, a feeder, and a codec in the communication device. Alternatively, if the paging apparatus is a chip disposed in a communication device, the transceiver (or the transmitter and the receiver) is, for example, a communication interface in the chip. The communication interface is connected to a radio frequency transceiver component in the communication device, to send and receive information through the radio frequency transceiver component. In a description process of the third aspect, an example in which the paging apparatus is a network device, and includes the processing unit and the transceiver unit and an example in which the paging apparatus is a terminal device, and includes the processing unit and the transceiver unit are separately used for description.

First, the example in which the paging apparatus is a network device is used for description.

The processing unit is configured to determine first paging configuration information corresponding to a first-type terminal device and second paging configuration information corresponding to a second-type terminal device; and the transceiver unit is configured to send the first paging configuration information and the second paging configuration information.

A capability of the first-type terminal device is different from a capability of the second-type terminal device.

It should be understood that the transceiver unit is further configured to perform a sending operation and a receiving operation in any one of the first aspect and the possible designs of the first aspect, and the processing unit is further configured to perform an operation other than the sending operation and the receiving operation in any one of the first aspect and the possible designs of the first aspect.

Then, the example in which the paging apparatus is a terminal device is used for description.

The transceiver unit is configured to receive second paging configuration information; and the processing unit is configured to determine that the second paging configuration information corresponds to a second-type terminal device.

The transceiver unit is further configured to receive fifth paging DCI based on the second paging configuration information.

It should be understood that the transceiver unit is further configured to perform a sending operation and a receiving operation in any one of the second aspect and the possible designs of the second aspect, and the processing unit is further configured to perform an operation other than the sending operation and the receiving operation in any one of the second aspect and the possible designs of the second aspect.

According to a fourth aspect, an embodiment of this application provides a paging apparatus. The paging apparatus includes a processor and a communication interface. The processor and the communication interface are coupled to each other, and are configured to implement the method described in any one of the first aspect, the second aspect, the possible designs of the first aspect, or the possible designs of the second aspect. The communication interface is configured to communicate with another apparatus or a device. Optionally, the paging apparatus may further include a memory, configured to store computer instructions. The processor, the memory, and the communication interface are coupled to each other, and are configured to implement the method described in any one of the first aspect, the second aspect, the possible designs of the first aspect, or the possible designs of the second aspect. For example, when the processor executes computer instructions stored in the memory, the paging apparatus is enabled to perform the method in any one of the first aspect, the second aspect, the possible designs of the first aspect, or the possible designs of the second aspect. For example, the paging apparatus is a communication device, or a chip or another component disposed in a communication device. For example, the communication device is a network device or a terminal device.

If the paging apparatus is a communication device, the communication interface is implemented as, for example, a transceiver (or a transmitter and a receiver) in the communication device, and the transceiver is implemented as, for example, an antenna, a feeder, and a codec in the communication device. Alternatively, if the paging apparatus is a chip disposed in a communication device, the communication interface is, for example, an input/output interface such as an input/output pin of the chip. The communication interface is connected to a radio frequency transceiver component in the communication device, to send and receive information through the radio frequency transceiver component.

According to a fifth aspect, an embodiment of this application provides a computer-readable storage medium.

The computer-readable storage medium stores computer instructions. When the instructions are executed, the method in any one of the first aspect, the second aspect, the possible designs of the first aspect, or the possible designs of the second aspect may be implemented.

According to a sixth aspect, an embodiment of this application further provides a computer program product, including a computer program or instructions. When the computer program or the instructions is/are executed, the method in any one of the first aspect, the second aspect, the possible designs of the first aspect, or the possible designs of the second aspect may be implemented.

According to a seventh aspect, an embodiment of this application further provides a chip. The chip is configured to implement the method in any one of the first aspect, the second aspect, the possible designs of the first aspect, or the possible designs of the second aspect.

According to an eighth aspect, an embodiment of this application provides a communication system. The communication system includes a network device and a terminal device. The network device is configured to implement the method in any one of the first aspect or the possible designs of the first aspect, and the terminal device is configured to implement the method in any one of the second aspect or the possible designs of the second aspect.

For technical effects that can be achieved in the second aspect to the eighth aspect, refer to technical effects that can be achieved in the first aspect.

## BRIEF DESCRIPTION OF DRAWINGS

FIG. 1 is a schematic diagram of a communication architecture according to an embodiment of this application;
FIG. 2 is a schematic diagram of a system information change according to an embodiment of this application;
FIG. 3 is a schematic diagram of a paging process according to an embodiment of this application;
FIG. 4 is a schematic diagram of paging cycles of different types of terminal devices according to an embodiment of this application;
FIG. 5 is a schematic diagram of time-frequency resources of different types of terminal devices according to an embodiment of this application;
FIG. 6 is a schematic diagram of a paging process according to an embodiment of this application;
FIG. 7 is a schematic diagram of a paging process according to an embodiment of this application;
FIG. 8 is a schematic diagram of a paging process according to an embodiment of this application;
FIG. 9 is a schematic block diagram 1 of a paging apparatus according to an embodiment of this application;
FIG. 10 is a schematic block diagram 2 of a paging apparatus according to an embodiment of this application; and
FIG. 11 is a schematic diagram of a structure of a terminal device according to an embodiment of this application.

## DESCRIPTION OF EMBODIMENTS

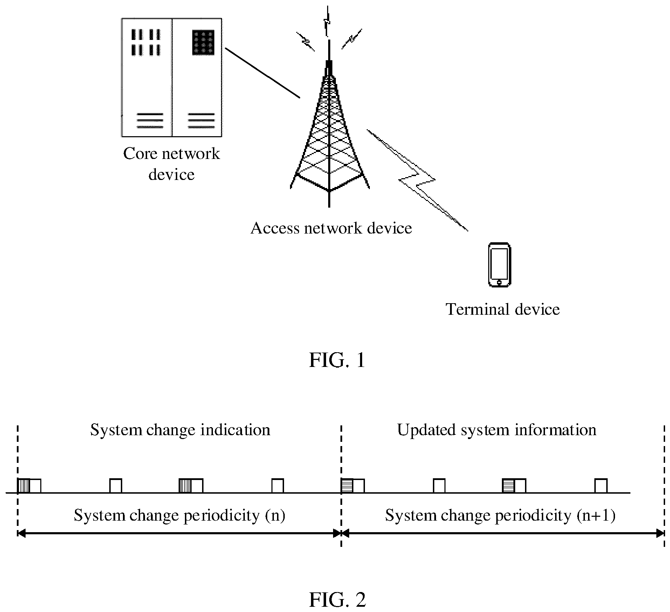

The technical solutions in embodiments of this application may be applied to various communication systems, for example, may be applied to a 5th generation (5th generation, 5G) communication system, or may be applied to worldwide interoperability for microwave access (worldwide interoperability for microwave access, WiMAX) or a future communication system, for example, a future 6th generation (6th generation, 6G) system. 5G may also be referred to as new radio (new radio, NR). For example, an architecture of a communication system to which embodiments of this application are applied may be shown in FIG. 1, including a network device (including a core network device and an access network device in FIG. 1) and a terminal device. The network device and the terminal device may perform wireless communication. It should be noted that a quantity of terminal devices and a quantity of network devices in the communication system shown in FIG. 1 are not limited in embodiments of this application.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design described as an "example" in this application should not be explained as being more preferred or having more advantages than another embodiment or design. Exactly, the word "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Before embodiments of this application are described, some terms in embodiments of this application are first described, to help a person skilled in the art have a better understanding.

(1) Terminal device: The terminal device includes a device that provides a voice and/or data connectivity for a user. Specifically, the terminal device includes a device that provides a voice for the user, or includes a device that provides data connectivity for the user, or includes a device that provides a voice and data connectivity for the user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device alternatively includes a limited device, for example, a device having low energy consumption, a device having a limited storage capability, or a device having a limited computing capability. For example, the terminal device includes an information sensing device such as barcode, radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is more than a hardware device. The wearable device implements powerful functions through software support, data exchange, and cloud interaction. In a broad sense, wearable intelligent devices include full-featured and large-sized devices that can implement all or some functions without depending on smartphones, for example, smart watches or smart glasses, and include devices that focus only on one type of application function and need to collaboratively work with other devices such as smartphones, for example, various smart bands, smart helmets, or smart jewelry for monitoring physical signs.

However, if the various terminal devices described above are located in a vehicle (for example, placed in the vehicle or mounted in the vehicle), the terminal devices may be all considered as vehicle-mounted terminal devices. For example, the vehicle-mounted terminal device is also referred to as an on board unit (on board unit, OBU).

In embodiments of this application, the terminal device may further include a relay (relay). Alternatively, it may be understood that any device that can perform data communication with a base station may be considered as a terminal device.

In embodiments of this application, an apparatus configured to implement a function of a terminal device may be a terminal device, or may be an apparatus, for example, a chip system, that can support the terminal device in implementing the function. The apparatus may be mounted in the terminal device. In embodiments of this application, the chip system may include a chip, or may include a chip and another discrete component. In the technical solutions provided in embodiments of this application, the technical solutions provided in embodiments of this application are described by using an example in which an apparatus for implementing a function of the terminal is the terminal device.

In addition, in embodiments of this application, the terminal device is further classified into different types of terminal devices, for example, includes a first-type terminal device and a second-type terminal device. A capability of the first-type terminal device may be different from a capability of the second-type terminal device. For example, the different capabilities of the first-type terminal device and the second-type terminal device are represented as one or more of the following: a maximum transmission bandwidth, a transmission rate, reliability, delay tolerance, a quantity of antennas, standby time, a terminal size, a hardware capability of the terminal, costs and complexity of the terminal, or the like. For example, in embodiments of this application, the first-type terminal device may be non-reduced capability UE (for example, NR legacy UE), and the second-type terminal device may be reduced capability UE (reduced capability UE). The reduced capability UE may also be referred to as NR-light UE. Alternatively, the first-type terminal device and the second-type terminal device may be two different types of reduced capability UEs (reduced capability UEs). It may be understood that the terminal device may further include a third-type terminal device, a fourth-network-type terminal device, and the like. More types of terminal devices may also implement a paging process by using an idea provided in embodiments of this application.

(2) Network device: The network device includes, for example, an access network (access network, AN) device such as a base station (for example, an access point), and may be a device that communicates with a wireless terminal device through an air interface by using one or more cells in an access network. Alternatively, for example, a network device in a vehicle-to-everything (vehicle-to-everything, V2X) technology is a road side unit (road side unit, RSU). The base station may be configured to perform mutual conversion between a received over-the-air frame and an IP packet, to serve as a router between the terminal device and a remaining part of the access network, where the remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, or may include a next generation NodeB (next generation NodeB, gNB) in a 5th generation (5th generation, 5G) mobile communication technology NR system (which is also briefly referred to as an NR system), or may include a centralized unit (centralized unit, CU) and a distributed unit (distributed unit, DU) in a cloud radio access network (cloud radio access network, C-RAN) system. This is not limited in embodiments of this application.

The network device may further include a core network (core network, CN) device, and the core network device includes, for example, an access and mobility management function (access and mobility management function, AMF).

In embodiments of this application, an apparatus configured to implement a function of a network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which an apparatus for implementing a function of the network device is the network device.

(3) Radio resource control (radio resource control, RRC) status: A terminal device has three RRC statuses: an RRC connected state (connected state), an RRC idle state (idle state), and an inactive state (inactive state).

RRC connected state (which is also referred to as a connected state, where in this specification, the "connected state" and the "RRC connected state" are a same concept, and the two terms are interchangeable): The terminal device establishes an RRC connection to a network, and may transmit data.

RRC idle state (which is also referred to as an idle state, where in this specification, the "idle state " and the "RRC idle state " are a same concept, and the two terms are interchanged): The terminal device does not establish an RRC connection to a network, and a base station does not store a context of the terminal device. If the terminal device needs to enter the RRC connected state from the RRC idle state, the terminal device needs to initiate an RRC connection establishment process.

RRC inactive state (which is also referred to as an inactive state, where in this specification, an "inactivated state", a "deactivated state", the "inactive state", the "RRC inactive state", and an "RRC deactivated state" are a same concept, and these names are interchangeable): The terminal device previously enters the RRC connected state, and then the base station releases the RRC connection, but the base station stores the context of the terminal device. If the terminal device needs to enter the RRC connected state from the RRC inactive state again, the terminal device needs to initiate an RRC connection resume process (or referred to as an RRC connection reestablishment process). Compared with the RRC connection establishment process, the RRC connection resume process has a shorter latency and smaller signaling overheads. However, the base station needs to store the context of the terminal device, causing storage overheads of the base station.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects.

"A plurality of" in this application refers to two or more than two.

In addition, it should be understood that in descriptions of this application, terms such as "first" and "second" are merely used for differentiation and description, but should not be understood as an indication or implication of relative importance or an indication or implication of an order.

For ease of understanding of embodiments of this application, the following describes an application scenario of this application.

First, paging (paging) is briefly described. In long term evolution (long term evolution, LTE) or NR, the paging is used to send a call request to a terminal device in an idle (IDLE) state or an inactive (INACTIVE) state.

In an NR system, a base station may send a paging message (paging message) to a terminal device in an RRC idle state, a dormant state, or an RRC inactive mode, to initiate paging and transmit data to the terminal device. Generally, when the base station needs to page the terminal device, the base station sends paging DCI on one or more POs, to indicate a resource carrying the paging message. The paging DCI is carried on a physical downlink control channel (physical downlink control channel, PDCCH) scrambled by using a paging radio network temporary identifier (paging radio network temporary identifier, P-RNTI). The PO includes a periodic paging search space (Search Space) and a periodic control resource set (control resource set, CORESET). The paging DCI is in a DCI format 1_0.

The terminal device receives/detects/monitors the paging DCI on one or more POs in one paging cycle. The paging DCI indicates the terminal device to read content of a paging message on a physical downlink shared channel (physical downlink shared channel, PDSCH) resource. The terminal device may read the content of the paging message on the PDSCH resource indicated by the paging DCI, to receive the paging message, and determine whether the base station pages the terminal device. A PO on which the terminal device needs to perform detection is determined through calculation based on an ID of the terminal device according to a predefined rule.

For example, a system frame number (system frame number, SFN) of a paging frame (paging frame, PF) including a PO on which the terminal device performs detection in a discontinuous reception (discontinuous reception, DRX) cycle is located, an index of the PO in the PF corresponding to the SFN, and the like may be determined by using the following formula.

The SFN of the PF satisfies the following formula:

$$(SFN + PF\_offset) \bmod T = \left(\frac{T}{N}\right) * (UE\_ID \bmod N) \quad \text{(Formula 1)}$$

An index $i_s$ of the PO in the SFN satisfies the following formula:

$$i_s = floor\left(\frac{UE\_ID}{N}\right) \bmod N_s \quad \text{(Formula 2)}$$

In the foregoing formulas, SFN represents the system frame number of the paging frame, $PF\_offset$ represents an offset of the PF, T represents the DRX cycle, N represents a total quantity of PFs included in one DRX cycle, $N_s$ represents a quantity of POs included in one PF, mod represents a modulo operation, UE_ID represents a value obtained based on the ID of the terminal device, and floor(x) represents rounding x down to the nearest integer. $PF_{offset}$, T, N, $N_s$ are all configured by the base station, and UE_ID is determined based on the ID of the terminal device. For example, UE_ID may be the last 10 bits of a 5G short-temporary mobile subscriber identity (5G short-temporary mobile subscriber identity, 5G-S-TMSI) of the terminal device. One PF may include one or more POs.

In an LTE system, a PDCCH occupies an entire frequency band in frequency domain. A network device notifies a terminal device of a quantity of orthogonal frequency division multiplexing (orthogonal frequency division multiplexing, OFDM) symbols occupied by the PDCCH, so that the terminal device can determine a search space of the PDCCH. In an NR system, a network device encapsulates, into a CORESET, information such as a frequency band occupied by a PDCCH in frequency domain and a quantity of OFDM symbols occupied by the PDCCH in time domain, and encapsulates, into a search space, information such as a number of a start OFDM symbol of the PDCCH and a PDCCH monitoring periodicity. A terminal device can determine, based on the CORESET and the search space, a frequency domain resource and a time domain resource that correspond to the PDCCH, to successfully decode the PDCCH. In the NR system, a system bandwidth is large. In this case, if the PDCCH does not occupy the entire bandwidth, a resource waste and excessively complex blind detection can be avoided.

The paging DCI may be used to indicate the terminal device to obtain updated system information (System Information, SI). The terminal device may update, based on the indication of the paging DCI, system information that has changed and that is required by the terminal device. When the network device modifies some system information, the network device first notifies, in a change periodicity, the terminal device that the system information is to change, but does not send updated system information. Then, the network device sends the updated system information in a next adjacent change periodicity, and the terminal device obtains the changed system information in the change periodicity. As shown in FIG. 2, different blocks represent different system information. For example, a block filled with vertical stripes represents system information 1, a block not filled with a stripe represents system information 2, and a block filled with horizontal stripes represents system information 3. In a system change periodicity n, the terminal device receives a system change indication, but current system information is still system information that is not updated, namely, the system information 1. The terminal device starts to receive new system information in a next system change periodicity (namely, a system change periodicity n+1). In the next system change periodicity n+1, the network device broadcasts new system information such as the system information 3, and the system information 2 does not change in this process. For different terminal devices in a same serving cell, paging moments corresponding to the different terminal devices are different. To ensure that all the terminal devices can simultaneously read updated system information, all the terminal devices read the system information at a uniform specified moment, that is, receive the new system information at the start of a next change periodicity. Before receiving the updated system information, the terminal devices always use old system information that is not updated.

In the NR system, the network device notifies, in the following two manners, the terminal device that the system information changes. In Manner 1, the network device may notify, by using a short message, a terminal device in the RRC_IDLE state, the RRC_INACTIVE state, and an RRC_CONNECTED state that the SI changes. The short message includes a systemInfoModification field (to notify a change of MSI/a SIB2/a SIB3/a SIB4/a SIB5) and an etwsAndCmasIndication field (to notify a change of a SIB6/a SIB7/a SIB8). If the short message message received by the terminal device includes the systemInfoModification field or the etwsAndCmasIndication field, it indicates that the SI is to change in a next change periodicity. In Manner 2, the network device indicates, by using a valueTag field included in SI-SchedulingInfo->SchedulingInfo->sib-MappingInfo in a SIB1, whether the SI changes. A value of the valueTag field ranges from 0 to 31. The terminal device may use the valueTag field to check whether the previously stored SI is valid. If the value of the valueTag field changes, the terminal device considers that the SI stored in the terminal device is invalid, and the terminal device needs to re-read the updated SI. If the value of the valueTag field does not change, the terminal device considers that the SI stored in the terminal device is still valid. In addition, the SI stored in the terminal device has a validity period of specified duration. For example, the validity period is three hours. The terminal device starts to determine, after receiving the SI, whether the value of the valueTag field changes within three hours. If the value of the valueTag field does not change within the three hours, the SI stored in the terminal device is valid within the three hours. Generally, all the SIBs except the MIB and the SIB1 have corresponding valueTag fields.

The paging DCI may be further used to indicate the terminal device to read the content of the paging message. The terminal device may obtain, based on a time-frequency position of the PDSCH resource indicated by the paging DCI, the content of the paging information at the time-frequency position.

In a conventional technology, same paging configuration information is used for different types of terminal devices. However, the different types of terminal devices have different capabilities. For example, the different types of terminal devices have different paging probabilities. As a result, a terminal device with a low paging probability is frequently woken up, causing high energy consumption. For another example, the different types of terminal devices require different system information, and a terminal device needs to read a specific field in a SIB1 to determine whether updated system information is required by the terminal device. For a terminal device that requires little system information, the terminal device needs to frequently read a SIB 1 to determine whether system information required by the terminal device is updated. Consequently, frequent reading also causes a problem of high energy consumption. In conclusion, when the same paging configuration information is used for the different types of terminal devices, the problem of high energy consumption may be caused.

In view of this, to reduce energy consumption in a paging process, this application provides a paging method, to set corresponding paging configuration information for different types of terminal devices, so as to ensure that the different types of terminal devices participate in the paging process by using the corresponding paging configuration information. This prevents the terminal device from being frequently woken up and frequently reading SIB 1 information, to implement energy saving in the paging process.

In this method, based on different capabilities of the different types of terminal devices, in the paging process, a network device sends the corresponding paging configuration information to the different types of terminal devices. A first-type terminal device receives corresponding paging DCI based on corresponding first paging configuration information, and a second-type terminal device receives corresponding paging DCI based on corresponding second paging configuration information. According to the method, the network device separately performs paging configuration and separately indicates the paging DCI for the different types of terminal devices. Therefore, when receiving an indication of the paging DCI, based on the corresponding paging configuration information, the terminal device performs a step such as obtaining system information or reading content of a paging message, to prevent the terminal device from being frequently woken up and frequently reading the SIB 1 information. This reduces energy consumption in the paging process, and achieves an objective of energy saving.

This application relates to two types of terminal devices. In this specification, the two types of terminal devices are referred to as the first-type terminal device and the second-type terminal device. A capability of the first-type terminal device is different from a capability of the second-type terminal device. Specifically, the two types of terminal devices may have one or more of the following distinguishing features.

(1) Different bandwidth capabilities: For example, the first-type terminal device can support data transmission with the network device by using a frequency resource with a maximum bandwidth of 100 MHz on one carrier, and the second-type terminal device can support data transmission with the network device by using a frequency resource with a maximum bandwidth of 20 MHz, 10 MHz, or 5 MHz on one carrier.

(2) Different quantities of transmit and receive antennas: For example, the first-type terminal device may support 4R2T or 4R1T. The second-type terminal device supports 2R1T or 1R1T at most. In other words, terminal devices that support different quantities of transmit antennas and/or different quantities of receive antennas may be considered as different types of terminal devices.

(3) Different maximum uplink transmit powers: For example, a maximum uplink transmit power of the first-type terminal device may be 23 dBm or 26 dBm, and a maximum uplink transmit power of the second-type terminal device may be only one value from 4 dBm to 20 dBm.

(4) Different protocol versions: For example, the first-type terminal device is a terminal device of NR Release 17 (or the first-type terminal device is a terminal device of NR Release 17 and a version later than NR Release 17), and the second-type terminal device is a terminal device of NR Release 15 and/or NR Release 16. In this application, terminal devices of NR Release 16 and a version earlier than NR Release 16 may also be referred to as NR-legacy (NR-Legacy) terminal devices.

(5) Different supported carrier aggregation capabilities: For example, the first-type terminal device may support carrier aggregation, and the second-type terminal device does not support carrier aggregation. For another example, both the two types of terminal devices can support carrier aggregation. However, a maximum quantity of carriers that can be simultaneously aggregated by the first-type terminal device is greater than a maximum quantity of carriers that can be simultaneously aggregated by the second-type terminal device. For example, the first-type terminal device may support aggregation of a maximum of five carriers or 32 carriers, and the second-type terminal device supports aggregation of a maximum of two carriers.

(6) Different duplex capabilities: For example, the first-type terminal device supports full-duplex FDD, or the first-type terminal device supports both full-duplex FDD and half-duplex FDD, and the second-type terminal device supports only half-duplex FDD.

(7) Different data processing time capabilities: A terminal device having a strong data processing time capability may be considered as the first-type terminal device, and a terminal device having a weak data processing time capability may be considered as the second-type terminal device. That the processing time capabilities are different may be represented by using a relationship between minimum data processing delays of the two types of terminal devices, may be represented by using a relationship between maximum data processing delays of the two types of terminal devices, or may be represented by using a relationship between a minimum data processing delay of one type of terminal device and a maximum data processing delay of the other type of terminal device. The data processing delay may be represented in at least one of the following forms: a delay between receiving downlink data and sending a feedback for the downlink data, a delay between sending uplink data and receiving a feedback for the uplink data, and a delay between receiving control information and sending uplink data based on the control information. For example, a minimum delay between receiving downlink data by one type of terminal device and sending a feedback for the downlink data is less than a minimum delay between receiving downlink data by the other type of terminal device and sending a feedback for the downlink data, and/or a minimum delay between sending uplink data by one type of terminal device and receiving a feedback for the uplink data is less than a minimum delay between sending uplink data by the other type of terminal device and receiving a feedback for the uplink data, and/or a minimum delay between receiving control information by one type of terminal device and sending uplink data based on the control information is less than a minimum delay between receiving control information by the other type of terminal device and sending uplink data based on the control information.

(8) Different processing capabilities: The processing capability of the terminal device herein may include at least one of the following: a quantity of hybrid automatic repeat request (hybrid automatic repeat request, HARQ) processes supported in uplink data transmission and/or downlink data transmission, a size of a soft buffer (soft buffer), highest quadrature amplitude modulation (quadrature amplitude modulation, QAM) supported in uplink data transmission and/or downlink data transmission, and the like. A terminal device having a strong processing capability may be considered as the first-type terminal device, and a terminal device having a weak processing capability may be considered as the second-type terminal device.

(9) Different uplink data transmission peak rates and/or different downlink data transmission peak rates.

Specifically, in this application, the second-type terminal device in the two types of terminal devices may be a reduced capability (reduced capability) terminal device, and the first-type terminal device may be a non-reduced capability terminal device. Alternatively, the first-type terminal device may be a reduced capability terminal device that is different from the second-type terminal device, or a terminal device that has both a reduced capability function and a non-reduced capability function (for example, a terminal device of NR Release 15 and/or NR Release 16, or an evolved terminal device in a future wireless communication system, which is not limited to an LTE terminal device and an NR terminal device). The reduced capability terminal device may correspond to the terminal device having a weak capability in the foregoing descriptions of the distinguishing features. Alternatively, both the two types of terminal devices may be reduced capability terminal devices, but there is one of the foregoing distinguishing features between the two types of terminal devices. For example, both the two types of terminal devices are reduced capability terminal devices. A maximum data transmission bandwidth of one type of terminal device on one carrier may be 20 MHz, and a maximum data transmission bandwidth of the other type of terminal device on one carrier is 10 MHz. In addition, the reduced capability (NR reduced capability, NR REDCAP) terminal device may also be referred to as an NR-light terminal device. It should be noted that the foregoing descriptions of the two types of terminal devices are merely possible applications. The communication method provided in embodiments of this application is applicable to two types of terminal devices having different capabilities. Different paging configuration information is sent to the terminal devices having different capabilities, to distinguish between time and frequencies at which the two types of terminal devices receive paging, so as to reduce unnecessary energy consumption for the terminal devices.

Optionally, the capability of the terminal device includes but is not limited to one or more of the following: a maximum transmission bandwidth, a transmission rate, reliability, delay tolerance, a quantity of antennas, standby time, a terminal size, a hardware capability of the terminal, costs and complexity of the terminal, or the like. It may be understood that, in addition to having one or more of the foregoing distinguishing features, the different types of terminal devices in this application may also differ in one or more of the foregoing specific capabilities of the terminal devices. The maximum transmission bandwidth is a maximum amount of data that can be transmitted by the terminal device (or a communication line on which the terminal device is located) in a unit time period, and the maximum transmission bandwidth can identify a data transmission capability of the terminal device (or the communication line on which the terminal device is located). The transmission rate is an amount of data transmitted in unit time, and the transmission rate is used to measure a transmission capability of a communication system. The reliability may be represented by using an indicator such as service quality and/or an error rate of the terminal device. The delay tolerance is a maximum delay that can be received by the terminal device in a communication process. The quantity of antennas is a quantity of antennas disposed in the terminal device. The standby time is generally related to a battery capacity of the terminal device and/or a service that the terminal device participates in. The terminal size is a body size of the terminal. The hardware capability of the terminal may include a network capability and the like of the terminal. The costs and complexity of the terminal device may be manufacturing complexity, costs, and the like of the terminal device during production.

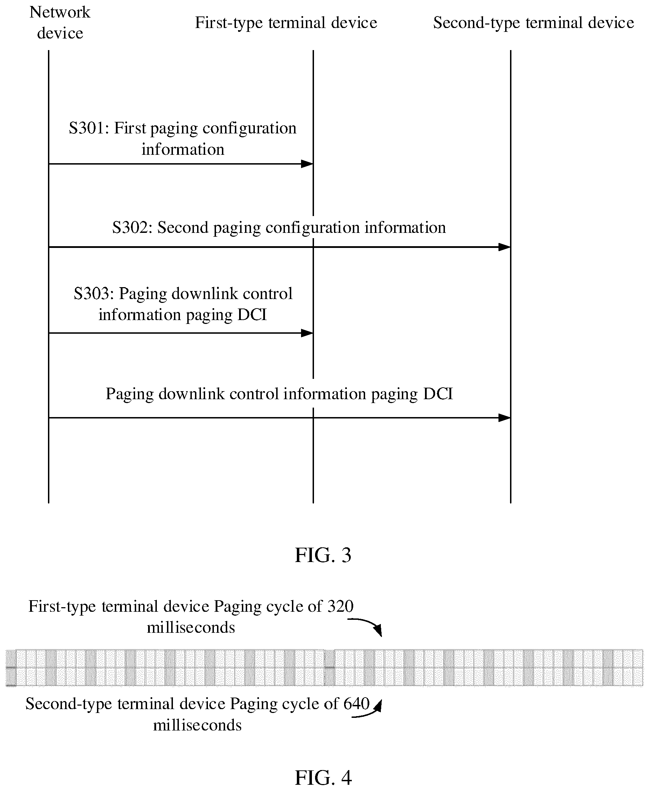

An embodiment of this application provides a paging method. The method may be applied to the communication system shown in FIG. 1. Refer to FIG. 3. A specific process of the paging method is described in detail. As shown in FIG. 3, the process includes the following steps.

S301: A network device sends first paging configuration information, where the first paging configuration information corresponds to a first-type terminal device, and the first-type terminal device receives the first paging configuration information.

The network device may be a core network device and/or an access network device. For example, the network device may be a base station.

For example, the first-type terminal device may be a non-reduced capability terminal device (for example, NR legacy UE), or may be a reduced capability terminal device that is different from a second-type terminal device. In this embodiment of this application, the NR legacy UE may be understood as a terminal device of an existing type.

In a possible implementation, the first paging configuration information includes but is not limited to one or more of the following: an occasion on which the first-type terminal device detects a PDCCH, a radio transmission resource corresponding to the first-type terminal device, and information used to indicate that there is paging DCI on a subsequent PO, where the paging DCI is used to notify the first-type terminal device to obtain updated system information or indicate that there is paging scheduling information for the first-type terminal device.

The first-type terminal device receives a paging message based on the first paging configuration information. Specifically, if the first paging configuration information includes the occasion on which the first-type terminal device detects the PDCCH, the first-type terminal device may detect the PDCCH on the occasion, to detect the paging DCI. If the first paging configuration information includes the radio transmission resource corresponding to the first-type terminal device, the first-type terminal device may detect the paging DCI on a corresponding time-frequency resource. The first-type terminal device receives the indication information, and the indication information is used to indicate that there is the paging DCI on the subsequent PO. The paging DCI is used to notify the first-type terminal device to obtain the updated system information. The first-type terminal device may monitor one or more subsequent POs, to obtain the paging DCI, and then obtain the updated system information based on the indication of the paging DCI. The first-type terminal device receives the indication information, and the indication information is used to indicate that there is the paging DCI on the subsequent PO. The paging DCI is used to indicate that there is the paging scheduling information for the first-type terminal device. The first-type terminal device may monitor one or more subsequent POs, to obtain the paging DCI or the like, and then read content of a paging message (paging message) on a corresponding PDSCH resource based on the indication of the paging DCI.

Before S301, the first-type terminal device may further report, to the network device, information about a paging-related capability, and/or report a first type of the first-type terminal device. The network device may determine, based on the information about the paging-related capability of the first-type terminal device and/or the first type, the first paging configuration information corresponding to the first-type terminal device. For example, in a process in which the first-type terminal device registers with the network device, the first-type terminal device reports the information about the paging-related capability, and/or report the first type of the first-type terminal device.

S302: The network device sends second paging configuration information, where the second paging configuration information corresponds to the second-type terminal device, and the second-type terminal device receives the second paging configuration information.

For example, the second-type terminal device may be a reduced capability terminal device (reduced capability UE). In this embodiment of this application, the reduced capability terminal device is also referred to as NR-light UE. The second-type terminal device may be understood as a terminal device of a newly added type.

Before S302, the second-type terminal device may further report information about a paging capability of the second-type terminal device to the network device, and/or report a second type of the second-type terminal device. The information about the paging capability may be used to determine the type of the terminal device. The network device may determine, based on the information about the paging capability of the second-type terminal device and/or the second type, the second paging configuration information corresponding to the second-type terminal device. For example, in a process in which the second-type terminal device registers with the network device, the second-type terminal device reports the information about the paging capability of the second-type terminal device and/or report the second type of the second-type terminal device.

It may be understood that the first paging configuration information and the second paging configuration information may be respectively carried in two different messages and delivered to the first-type terminal device and the second-type terminal device, or the first paging configuration information and the second paging configuration information may be carried in one message and delivered to the first-type terminal device and the second-type terminal device. For example, if the first paging configuration information and the second paging configuration information are respectively carried in two different messages, the network device sends, to the first-type terminal device, a first message that carries the first paging configuration information, and the first-type terminal device receives and stores the first paging configuration information. The network device sends, to the second-type terminal device, a second message that carries the second paging configuration information, and the second-type terminal device receives and stores the second paging configuration information. The first message and the second message are different messages, and the first message and the second message may be existing messages, or may be newly added messages. When the first paging configuration information and the second paging configuration information are respectively carried in different messages, S301 or S302 is an optional step, and S301 and S302 are independent of each other. The first-type terminal device needs to receive only the first paging configuration information, and the second-type terminal device needs to receive only the second paging configuration information. For another example, if the first paging configuration information and the second paging configuration information are carried in one message, a third message carries the first paging configuration information and the second paging configuration information. The network device sends the third message to the first-type terminal device and the second-type terminal device. The first-type terminal device receives the third message, identifies the first paging configuration information in the third message, and stores the first paging configuration information. The second-type terminal device receives the third message, identifies the second paging configuration information in the third message, and stores the second paging configuration information. The third message may be an existing message, or may be a newly added message.

In addition, optionally, the first paging configuration information includes a paging cycle corresponding to the first-type terminal device, and the second paging configuration information includes a paging cycle corresponding to the second-type terminal device. The paging cycle corresponding to the first-type terminal device is different from the paging cycle corresponding to the second-type terminal device. For example, due to a service feature of the second-type terminal device, a paging probability of the second-type terminal device is lower than a paging probability of the first-type terminal device. Therefore, the paging cycle of the second-type terminal device may be longer than the paging cycle of the first-type terminal device. In this way, the second-type terminal device has longer sleep time and lower wake-up frequency than the first-type terminal device, so that energy consumption in a paging process is further reduced. For example, the first paging configuration information and the second paging configuration information are carried in one message. The first-type terminal device may select, based on the two received paging cycles, a shorter paging cycle from the two paging cycles, and determine the shorter paging cycle as the paging cycle corresponding to the first-type terminal device. The second-type terminal device may select, based on the two received paging cycles, a longer paging cycle from the two paging cycles, and determine the longer paging cycle as the paging cycle corresponding to the second-type terminal device.

For example, as shown in FIG. 4, a paging cycle T included in the first paging configuration information is 320 milliseconds (ms), and a density is T/4. To be specific, eight system frames may be used as PFs in each paging cycle (320 ms), and the terminal device monitors POs in two PFs in 640 ms. A paging cycle T included in the second paging configuration information is 640 ms, and a density is T/4. To be specific, 16 system frames may be used as PFs in each paging cycle (640 ms), and the terminal device monitors a PO in one PF in 640 ms. It can be learned that the paging cycle of the first-type terminal device in FIG. 4 is shorter than the paging cycle of the second-type terminal device. If the PFs of the first-type terminal device and the PFs of the second-type terminal device are distributed at a same density, the second-type terminal device monitors the PO at a lower frequency. Therefore, energy consumption of the second-type terminal device is also reduced. In a possible case, in the PF and the PO obtained through calculation, the network device may page both the first-type terminal device and the second-type terminal device. In other words, both the first-type terminal device and the second-type terminal device may detect the paging DCI on a specific PO.

The network device configures the corresponding configuration information for the different types of terminal devices, so that the terminal device receives the paging message when the resource indicated by the configuration information corresponding to the terminal device is satisfied, and does not receive the paging message when the resource indicated by the configuration information corresponding to the terminal device is not satisfied, to reduce energy consumption of the terminal device.

S303: The network device sends paging DCI to the first-type terminal device based on the first paging configuration information, and the first-type terminal device receives the paging DCI; and/or the network device sends paging DCI to the second-type terminal device based on the second paging configuration information, and the second-type terminal device receives the paging DCI.

The paging process includes one or more of a paging process initiated by a core network (CN-paging), a paging process initiated by an access network (RAN-paging), or a paging process used to notify that the system information changes.

For the CN-paging, an example in which the network device is a base station is used. Before S303, the base station may further receive a fourth message from a core network device. The fourth message is used to notify the base station of the type of the terminal device that is to receive the paging DCI. If the fourth message is used to notify that the first-type terminal device is to receive the paging DCI, the base station sends the paging DCI to the first-type terminal device based on the first paging configuration information. If the fourth message is used to notify that the second-type terminal device is to receive the paging DCI, the base station sends the paging DCI to the second-type terminal device based on the second paging configuration information.

For the RAN-paging and the paging process used to notify that the system information changes, an example in which the network device is a base station is used. Before S303, the base station may determine the type of the terminal device that is to receive the paging DCI. If determining that the first-type terminal device is to receive the paging DCI, the base station sends the paging DCI to the first-type terminal device based on the first paging configuration information. If determining that the second-type terminal device is to receive the paging DCI, the base station sends the paging DCI to the second-type terminal device based on the second paging configuration information.

The paging DCI sent to the first-type terminal device is used to notify the first-type terminal device to obtain updated system information or indicate that there is paging scheduling information for the first-type terminal device (that is, notify the first-type terminal device to read content of a paging message on a PDSCH resource indicated by the paging DCI). The paging DCI sent to the first-type terminal device includes a position of the PDSCH resource, and the first-type terminal device may read the content of the paging message at the position of the corresponding PDSCH resource. The paging DCI sent to the second-type terminal device is used to notify the second-type terminal device to obtain updated system information or indicate that there is paging scheduling information for the second-type terminal device (that is, notify the second-type terminal device to read content of a paging message on a PDSCH resource indicated by the paging DCI). The paging DCI sent to the second-type terminal device includes a position of the PDSCH resource, and the second-type terminal device may read the content of the paging message at the position of the corresponding PDSCH resource.

In S303, if the paging DCI sent to the first-type terminal device and the paging DCI sent to the second-type terminal device are different, a process in which the network device sends the paging DCI to the first-type terminal device and a process in which the network device sends the paging DCI to the second-type terminal device are independent of each other.

In this embodiment of this application, an example in which the paging DCI is sent to the second-type terminal device is mainly used to describe the paging process. For a paging process related to the first-type terminal device, refer to the paging process of the second-type terminal device. Alternatively, a paging process shown in a conventional technology is used. To be specific, in this embodiment of this application, an existing paging process of the first-type terminal device and a newly added paging process of the second-type terminal may be improved, or only the newly added paging process of the second-type terminal device may be improved.

For example, in this embodiment of this application, the paging DCI may be sent to the second-type terminal device in the following implementations.

Manner 1: The network device may divide SIBs into a plurality of SIB groups (groups) in advance. Each SIB group includes one or more SIBs, and different types of terminal devices may correspond to different SIB groups. Further, the network device may further preset a correspondence between indication information and the SIB group. Division information of each SIB group and/or a correspondence between the SIB group and the terminal device may be indicated by using first information. For details about a definition of the first information, refer to related descriptions below. In this way, the network device may indicate, by using the indication information in the paging DCI, whether the corresponding SIB group changes. The terminal device determines, based on the indication information in the paging DCI, whether a SIB corresponding to the terminal device changes. When the SIB changes, the terminal device obtains the updated system information. When the SIB does not change, the terminal device does not need to repeatedly obtain the system information. This reduces the energy consumption in the paging process.

Optionally, the network device may obtain the SIB groups through division based on the type of the terminal device, or obtain the SIB groups through division based on a service requirement. If the SIB groups are obtained through division based on the type of the terminal device, the network device may obtain, through division, a SIB group corresponding to the first-type terminal device and a SIB group corresponding to the second-type terminal device. The SIB group corresponding to the first-type terminal device includes a SIB required by the first-type terminal device, and the SIB group corresponding to the second-type terminal device includes a SIB required by the second-type terminal device. For example, the SIB group corresponding to the second-type terminal device may include one or more of a SIB2, a SIB3, a SIB4, or a SIB5. In a possible implementation, due to a service feature of the second-type terminal device, the second-type terminal device needs fewer SIBs than the first-type terminal device. Therefore, compared with the SIB included in the SIB group corresponding to the first-type terminal device, the SIB group corresponding to the second-type terminal device includes fewer SIBs. Each type of terminal device may correspond to one or more SIB groups. If the SIB groups are obtained through division based on the service requirement, the network device may obtain, through division, a SIB group corresponding to a first service, a SIB group corresponding to a second service, and a SIB group corresponding to a third service. Using several typical application scenarios as an example, service requirements of the different application scenarios, for example, including an industrial wireless sensor, video surveillance, and a wearable device, are different. A SIB group corresponding to the wearable device may include one or more of a SIB6, a SIB7, or a SIB8. The SIB6, the SIB7, or the SIB8 are system information related to a public warning. However, in the scenario of the industrial wireless sensor and the video surveillance scenario, the system information related to the public warning, for example, the SIB6, the SIB7, or the SIB8 may be required or may not be required. Therefore, whether the system information such as the SIB6, the SIB7, or the SIB8 is required in the scenario of the industrial wireless sensor and the video surveillance scenario may be determined based on different actual requirements.

Before S303, the network device may further send the first information. The first information is used to indicate the SIB included in each SIB group. The second-type terminal device receives the first information, and determines, based on a use requirement of the second-type terminal device, the SIB group corresponding to the second-type terminal device. Optionally, the first information may be further used to indicate the SIB group corresponding to the second-type device, that is, the first information directly indicates a correspondence between the type of the terminal device and the SIB group. The second-type terminal device may directly determine, based on the received first information, the SIB group corresponding to the second-type terminal device. Optionally, the first information may be transmitted by using the second paging configuration information, may be transmitted by using a newly added message, may be included in the paging DCI (for example, first paging DCI), or may be included in other existing system information.

When performing S303, the network device sends the first paging DCI. The first paging DCI includes an indication information set, the indication information set includes at least one piece of indication information, the at least one piece of indication information is used to identify whether a corresponding SIB group changes, and a change of the SIB group includes a change of any SIB in the SIB group. For example, elements in the indication information set are in one-to-one correspondence with elements in a SIB group set. In other words, each piece of indication information is used to indicate a corresponding SIB group. When receiving the first paging DCI, the second-type terminal device may determine whether the SIB group corresponding to the second-type terminal device changes. A change of the SIB group includes a change of any SIB in the SIB group. In other words, if the SIB group corresponding to the second-type terminal device changes, it may be determined that the SIB required by the second-type terminal device is updated, and the second-type terminal device needs to obtain the updated system information. Specifically, the indication information is used to identify that the corresponding SIB group changes, or the indication information is used to identify that the corresponding SIB does not change.

The indication information set and the indication information may be a reused existing field (for example, a field of a redundant bit), a newly added field, or the like. For example, the indication information set is a short message or a part of bits in a short message. The indication information set includes a plurality of redundant bits, and the redundant bits, for example, short message bits, are used as a newly added field of the indication information. Different short message bits separately indicate whether corresponding SIB groups change, to indicate whether SIBs in the corresponding SIB groups change.

It may be understood that, in this manner, execution of step S303 is independent of whether the first information is sent, and the network device and the terminal device may agree in advance on a meaning of each piece of indication information in the indication information set. In this way, the network device may directly indicate, by using the element in the indication information set, whether the SIB group corresponding to the terminal device changes, to indicate, to the terminal device, whether to obtain the new system information. For example, the network device and the terminal device agree to use one bit in the short message, to indicate that the system information required by the second-type terminal device is not updated (that is, to trigger that the second-type terminal device does not require the system information), or to indicate that the system information required by the second-type terminal device is updated (that is, to trigger that the second-type terminal device needs to obtain the updated system information). Alternatively, for example, the network device and the terminal device agree to use one bit in the short message to indicate whether a specific SIB changes. The SIB group is agreed in advance to include one or more of the SIB2, the SIB3, the SIB4, or the SIB5, so that the network device can directly indicate that the terminal device corresponding to the SIB in the SIB group needs to obtain the new system information.

Manner 2: When S303 is performed, the network device may send second paging DCI. The second paging DCI corresponds to the second-type terminal device, the second paging DCI includes second information, and the second information is used to notify the second-type terminal device to obtain the updated system information or indicate that there is the paging scheduling information for the second-type terminal device, or the second information is used to notify the second-type terminal device not to obtain the updated system information or indicate that there is no paging scheduling information for the second-type terminal device. In this way, if the second paging DCI is received, the second paging DCI corresponds to the second-type terminal device, and the second information is used to notify the second-type terminal device to obtain the updated system information or indicate that there is the paging scheduling information for the second-type terminal device, the second-type terminal device may obtain the updated system information or read the content of the paging message based on the indication of the second information in the second paging DCI. If the second information indicates the second-type terminal device not to obtain the updated system information or indicates that there is no paging scheduling information for the second-type terminal device, or the second-type terminal device does not receive the second paging DCI, or the received paging DCI does not correspond to the second-type terminal device, the second-type terminal device does not need to perform a step such as obtaining the system information or reading the content of the paging message, to reduce the energy consumption in the paging process.

A correspondence between the second paging DCI and the second-type terminal device may be indicated in at least one of the following manners.

(1) The network device may indicate the correspondence in an implicit manner. For example, the network device may define different paging DCI formats (formats) for different types of terminal devices. For example, the network device defines a paging DCI format corresponding to the first-type terminal device and a paging DCI format corresponding to the second-type terminal device, and/or the network device scrambles a PDCCH by using a P-RNTI corresponding to the first-type terminal device, and scrambles a PDCCH by using a P-RNTI corresponding to the second-type terminal device. In this way, the terminal device performs the step such as obtaining the system information or reading the content of the paging message only when receiving the paging DCI format corresponding to the terminal device, and does not need to perform the step such as obtaining the system information or reading the content of the paging message when not receiving the paging DCI format corresponding to the terminal device, so that the energy consumption in the paging process is further reduced.

For another example, the network device indicates the correspondence between the second paging DCI and the second-type terminal device by using a scrambling parameter. Specifically, the second paging DCI is carried on a first PDCCH, the first PDCCH is scrambled by using a first P-RNTI, and the first P-RNTI corresponds to the second-type terminal device. For the second-type terminal device, the second-type terminal device can successfully descramble the first PDCCH based on the first P-RNTI corresponding to the second-type terminal device, so that the second-type terminal device determines that the second paging DCI carried on the first PDCCH is the paging DCI sent to the second-type terminal device. For the first-type terminal device, the first-type terminal device cannot successfully descramble the first PDCCH based on a second P-RNTI corresponding to the first-type terminal device, and the first-type terminal device determines that the second paging DCI carried on the first PDCCH is not the paging DCI sent to the first-type terminal device. Correspondingly, the paging DCI sent to the first-type terminal device is carried on a second PDCCH, the second PDCCH is scrambled by using the second P-RNTI, and the second P-RNTI corresponds to the first-type terminal device. The second-type terminal device cannot successfully descramble the second PDCCH based on the first P-RNTI corresponding to the second-type terminal device, and the second-type terminal device determines that the paging DCI carried on the second PDCCH is not the paging DCI sent to the second-type terminal device. The second-type terminal device does not perform the step such as obtaining the system information or reading the content of the paging message. Whether the first PDCCH is the same as the second PDCCH is not limited herein. For example, when the first PDCCH and the second PDCCH are the same, the paging DCI carried on the first PDCCH/the second PDCCH indicates both the first-type terminal device and the second-type terminal device.

For another example, the network device indicates the correspondence between the second paging DCI and the second-type terminal device by using a format of the second paging DCI. Specifically, the format of the second paging DCI corresponds to the second-type terminal device. The terminal device may determine, based on the format of the paging DCI, whether the paging DCI is the paging DCI sent to the terminal device. The second-type terminal device may determine, based on the format of the second paging DCI, that the second paging DCI is the paging DCI sent to the second-type terminal device, and the first-type terminal device may determine, based on the format of the second paging DCI, that the second paging DCI is not the paging DCI sent to the first-type terminal device. The format may also be understood as a transmission form.

(2) Alternatively, the network device may indicate the correspondence in an explicit manner, and the second information may be indicated by using a reserved field. For example, six redundant bits in the paging DCI are used to indicate the second information.

Manner 3: The network device configures different radio transmission resources for different types of terminal devices. The different types of terminal devices need to monitor the paging DCI only on the radio transmission resources corresponding to the different types of terminal devices. If the terminal device does not detect the paging DCI, the terminal device does not need to perform the step such as obtaining the system information or reading the content of the paging message, so that the energy consumption in the paging process is reduced.

For example, the second paging configuration information further includes third information. The third information is used to indicate a radio transmission resource corresponding to a terminal device, and the radio transmission resource includes one or more of a time domain resource, a frequency domain resource, or a code domain resource. The radio transmission resource that corresponds to the terminal device and that is indicated by the third information in the second paging configuration information is a radio transmission resource corresponding to the second-type terminal device.

The radio transmission resource includes a search space, a CORESET, and/or a P-RNTI.

The radio transmission resources corresponding to the different types of terminal devices are different. That time domain resources are different and frequency domain resources are different includes that search spaces and/or CORESETs corresponding to the different types of terminal devices are different. That code domain resources are different includes that P-RNTIs corresponding to the different types of terminal devices are different.

In this manner, the network device sends third paging DCI based on the radio transmission resource corresponding to the second-type terminal device. Correspondingly, the second-type terminal device receives the third paging DCI based on the corresponding radio transmission resource.

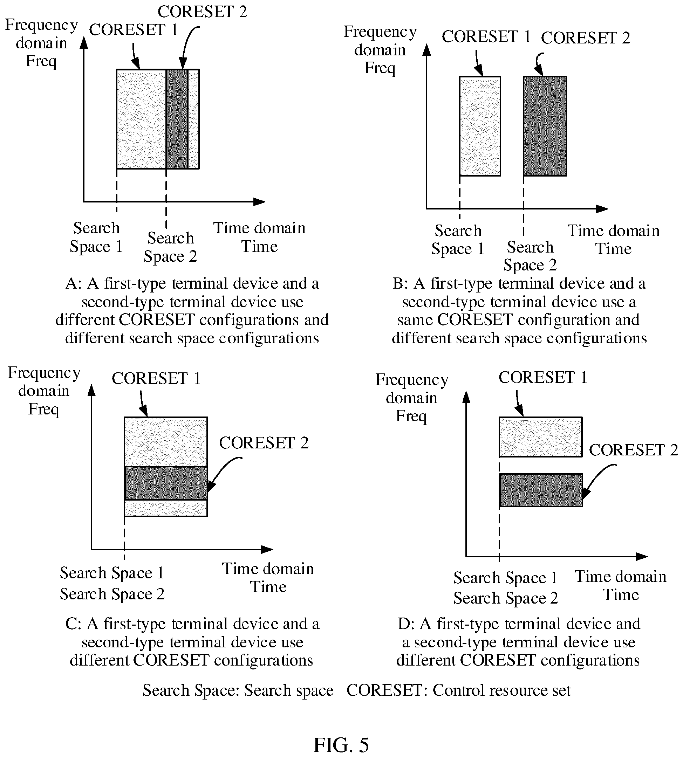

That time-frequency resources are different in Manner 3 is described by using FIG. 5 as an example. The paging DCI of the first-type terminal device is sent on a time-frequency resource in a light-color part, and the paging DCI of the second-type terminal device is sent on a time-frequency resource in a dark-color part. A CORESET 1 is a CORESET used by the first-type terminal device, a search space 1 is a search space used by the first-type terminal device, a CORESET 2 is a CORESET used by the second-type terminal device, and a search space 2 is a search space used by the second-type terminal device. In Manner A, the first-type terminal device and the second-type terminal device use different CORESETs and different search spaces. In Manner B, the first-type terminal device and the second-type terminal device use a same CORESET and different search spaces. In Manner C, the first-type terminal device and the second-type terminal device use different CORESETs, and a search space is not limited (search spaces of the first-type terminal device and the second-type terminal device that are shown in FIG. 5 are the same). In Manner D, the first-type terminal device and the second-type terminal device use different CORESETs, and a search space is not limited (search spaces of the first-type terminal device and the second-type terminal device that are shown in FIG. 5 are the same). If Manner A and Manner C are used to configure the time-frequency resource, if the paging DCI is used to notify the first-type terminal device to obtain the updated system information or indicate that there is the paging scheduling information for the first-type terminal device, the second-type terminal device does not detect the paging DCI, and does not perform the step such as obtaining the system information or reading the content of the paging message. If the paging DCI is used to notify the second-type terminal device to obtain the updated system information or indicate that there is the paging scheduling information for the second-type terminal device, the first-type terminal device does not detect the paging DCI, and does not perform the step such as obtaining the system information or reading the content of the paging message. If Manner B and Manner D are used to configure the time-frequency resource, the paging DCI of the first-type terminal device and the paging DCI of the second-type terminal device are sent on two different time-frequency resources. If the paging DCI is used to notify the first-type terminal device to obtain the updated system information or indicate that there is the paging scheduling information for the first-type terminal device, the second-type terminal device does not detect the paging DCI, and does not perform the step such as obtaining the system information or reading the content of the paging message. If the paging DCI is used to notify the second-type terminal device to obtain the updated system information or indicate that there is the paging scheduling information for the second-type terminal device, the first-type terminal device does not detect the paging DCI, and does not perform the step such as obtaining the system information or reading the content of the paging message. This implements separate scheduling of the paging DCI, to achieve an objective of energy saving.

Manner 4: The network device may notify the terminal device that there is paging DCI on one or more subsequent POs. The paging DCI is used to notify the terminal device to obtain the updated system information or indicate that there is the paging scheduling information for the terminal device.

It may be understood that the network device may indicate, by using fourth information, the terminal device to determine whether to receive the paging DCI on the subsequent PO, to reduce the energy consumption of the terminal device. For example, the network device notifies, by using the fourth information, the first-type terminal device to obtain the updated system information or indicates, by using the fourth information, that there is the paging scheduling information for the terminal device. To be specific, the network device notifies, by using the fourth information, the first-type terminal device that there is the paging DCI on the one or more subsequent POs. The paging DCI is used to notify the first-type terminal device to obtain the updated system information or indicate that there is the paging scheduling information for the first-type terminal device. The first-type terminal determines that the paging DCI on the subsequent PO provides the indication for the first-type terminal device, and the first-type terminal device monitors the corresponding PO. The second-type terminal device determines that the paging DCI on the subsequent PO does not provide the indication for the second-type terminal device, and the second-type terminal device may not monitor the corresponding PO, to reduce the energy consumption in the paging process. Similarly, for another example, the network device notifies, by using the fourth information, the second-type terminal device to obtain the updated system information or indicates, by using the fourth information, that there is the paging scheduling information for the terminal device. To be specific, the network device notifies, by using the fourth information, the second-type terminal device that there is the paging DCI on the one or more subsequent POs. The paging DCI is used to notify the second-type terminal device to obtain the updated system information or indicate that there is the paging scheduling information for the second-type terminal device. The second-type terminal determines that the paging DCI on the subsequent PO provides the indication for the second-type terminal device, and the second-type terminal device monitors the corresponding PO. The first-type terminal device determines that the paging DCI on the subsequent PO does not provide the indication for the first-type terminal device, and the first-type terminal device may not monitor the corresponding PO, to reduce the energy consumption in the paging process.

Specifically, the fourth information may indicate at least one of the following:

(1) On the subsequent PO, there is the paging DCI used to notify the first-type terminal device and/or the second-type terminal device to update a system message.
(2) On the subsequent PO, there is the paging DCI used to notify the first-type terminal device and/or the second-type terminal device to read the content of the paging message.

After receiving the fourth information, the terminal device may determine, based on the fourth information, whether the paging DCI on the subsequent PO is paging DCI of a corresponding type. The terminal device may further determine whether an initiation reason of the paging DCI is a system information update or paging message scheduling. In this way, the terminal device can determine whether the paging DCI needs to be received, to avoid excessive energy consumption caused by unnecessary frequent monitoring. For example, if the fourth information indicates that the paging DCI on the subsequent PO is used to notify the first-type terminal device of the system information update, the first-type terminal device subsequently receives the paging DCI, and obtains the updated system information based on the indication in the paging DCI. If the fourth information indicates that the paging DCI on the subsequent PO is used to notify the second-type terminal device of the system information update, the second-type terminal device subsequently receives the paging DCI, and obtains the updated system information based on the indication in the paging DCI. Alternatively, if the fourth information indicates that the paging DCI on the subsequent PO is used to notify the first-type terminal device that there is the paging scheduling information, the first-type terminal device subsequently receives the paging DCI, and reads the content of the paging message based on the indication of the paging DCI. If the fourth information indicates that the paging DCI on the subsequent PO is used to notify the second-type terminal device that there is the paging scheduling information, the second-type terminal device subsequently receives the paging DCI, and reads the content of the paging message based on the indication of the paging DCI. If the first-type terminal device determines, based on the indication of the fourth information, that the system information does not need to be updated and the content of the paging message does not need to be read, the first-type terminal device does not need to receive the paging DCI, to reduce the energy consumption. If the second-type terminal device determines, based on the indication of the fourth information, that the system information does not need to be updated and the content of the paging message does not need to be read, the second-type terminal device does not need to receive the paging DCI, to reduce the energy consumption. The fourth information may further indicate a subsequent PO or subsequent POs on which the terminal device monitors the paging DCI. For example, the network device sends the fourth information. The fourth information is used to indicate that there is fourth paging DCI on a first PO, and the fourth paging DCI is used to notify the second-type terminal device to obtain the updated system information or indicate that there is the paging scheduling information for the second-type terminal device, and/or the fourth information is used to indicate that there is paging DCI on a second PO, and the paging DCI is used to notify the first-type terminal device to obtain the updated system information or indicate the paging scheduling information for the first-type terminal device. The first PO or the second PO may be a PO in a next change periodicity, or a PO in a subsequent change periodicity.

Specifically, if the fourth information indicates that there is the fourth paging DCI on the first PO, the second-type terminal device receives the paging DCI on the first PO. If the second-type terminal device does not receive the fourth information, or the received fourth information does not indicate that there is the subsequent paging DCI, the second-type terminal device does not monitor the corresponding PO, to further reduce the energy consumption in the paging process.

If the fourth information is used to indicate that there is the paging DCI on the second PO, and the paging DCI is used to notify the first-type terminal device to obtain the updated system information or indicate the paging scheduling information for the first-type terminal device, the first-type terminal device monitors a PDCCH on the second PO and receives the paging DCI. If the first-type terminal device does not receive the fourth information, or the received fourth information does not indicate that there is the subsequent paging DCI, the first-type terminal device does not monitor the corresponding PO, to further reduce the energy consumption in the paging process.

Optionally, the network device may further send fifth information. The fifth information may be used to indicate some information related to the fourth information, for example, a time-frequency resource corresponding to the fourth information and/or a PO or POs on which the terminal device monitors the paging DCI. For example, the terminal device may monitor the fourth information at a position of the time-frequency resource indicated by the fifth information. Optionally, the fifth information may be carried in the second paging configuration information, may be carried in a newly added message, or may be carried in other existing system information. It may be understood that, in this manner, execution of the step of sending the fourth information is independent of whether the fifth information is sent, and the network device and the terminal device may agree in advance on a time domain resource corresponding to the fourth information.

In conclusion, in this embodiment of this application, all of Manner 1 to Manner 4 can reduce the energy consumption in the paging process, and achieve the objective of energy saving. Therefore, it may be understood that Manner 1, Manner 2, Manner 3, and Manner 4 may be used separately, or may be used in combination. In addition, based on the descriptions in the foregoing embodiment, it can be learned that implementation of the foregoing several manners is independent of each step shown in FIG. 3, that is, S301, S302, and S303 shown in FIG. 3 are optional steps in a process of implementing the foregoing several manners.

According to the solution provided in this embodiment of this application, the different types of terminal devices have the different capabilities. In the paging process, the network device sends the corresponding paging configuration information to the different types of terminal devices. The first-type terminal device receives the corresponding paging DCI based on the corresponding first paging configuration information, and the second-type terminal device receives the corresponding paging DCI based on the corresponding second paging configuration information. According to the method, the network device separately performs paging configuration and separately indicates the paging DCI for the different types of terminal devices. Therefore, when receiving the indication of the paging DCI based on the corresponding paging configuration information, the terminal device performs the step such as obtaining the system information or reading the content of the paging message, to prevent the terminal device from being frequently woken up and frequently reading the SIB 1 information. This reduces the energy consumption in the paging process, and achieves the objective of energy saving.

The following describes the paging process by using an example in which the first-type terminal device is NR legacy UE and the second-type terminal device is reduced capability UE.

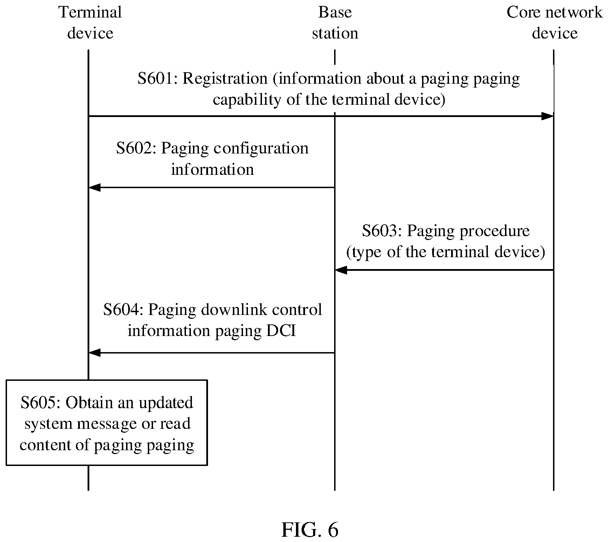

As shown in FIG. 6, Manner 1 and Manner 2 are combined and applied to a paging process, and the process includes the following steps.

S601: A terminal device registers with a core network device, where the terminal device reports information about a paging capability of the terminal device during registration.

The information about the paging capability of the terminal device may be used to determine a type of the terminal device, for example, determine that the terminal device is NR legacy UE or reduced capability UE.

S602: A base station broadcasts paging configuration information, where the paging configuration information includes first paging configuration information corresponding to the NR legacy UE and second paging configuration information corresponding to the reduced capability UE. The terminal device receives the paging configuration information.

The paging configuration information may be carried in a SIB 1 for delivery.

The paging configuration information includes a related parameter, for example, a PF and a PO, used to calculate paging DCI.

A paging cycle that is of a second-type terminal device and that is included in the second paging configuration information is different from a paging cycle that is of a first-type terminal device and that is included in the first paging configuration information. For example, a paging cycle parameter in the second paging configuration information is greater than a paging cycle parameter in the first paging configuration information. If the terminal device is the NR legacy UE, the terminal device selects the first paging configuration information that includes a shorter paging cycle. If the terminal device is the reduced capability UE, the terminal device selects the second paging configuration information that includes a longer paging cycle.

If SIB group division is predefined, the paging configuration information further includes a SIB group corresponding to the NR legacy UE and a SIB group corresponding to the reduced capability UE. For example, the paging configuration information includes a plurality of SIB groups and a SIB included in each SIB group. The terminal device determines, based on a requirement of the terminal device, one or more SIB groups corresponding to the terminal device. Specifically, the NR legacy UE determines one or more SIB groups corresponding to the NR legacy UE, and the reduced capability UE determines one or more SIB groups corresponding to the reduced capability UE. The SIB group corresponding to the NR legacy UE may be different from the SIB group corresponding to the reduced capability UE.

S603: A core network initiates a paging procedure, and the core network device notifies the base station of a type of a terminal device to which the paging DCI is sent, that is, whether the paging DCI is sent to the NR legacy UE or the reduced capability UE.

If an access network initiates the paging procedure or a paging process used to notify that system information changes, the base station determines the type of the terminal device to which the paging DCI is sent, that is, whether the paging DCI is sent to the NR legacy UE or the reduced capability UE.

S604: The base station sends the paging DCI based on paging configuration information corresponding to the type of the terminal device. The terminal device receives the paging DCI based on the paging configuration information corresponding to the type of the terminal device.

For example, the NR legacy UE determines a PF and a PO based on the first paging configuration information, and monitors the paging DCI. Alternatively, the reduced capability UE determines a PF and a PO based on the second paging configuration information, and monitors the paging DCI.

In addition, if the paging DCI is sent to the reduced capability UE, the base station scrambles, by using a first P-RNTI corresponding to the reduced capability UE, a first PDCCH carrying the paging DCI, and/or uses a format of the paging DCI corresponding to the reduced capability UE, and/or the paging DCI includes second information. For example, the second information is used to notify the reduced capability UE to obtain updated system information or indicate that there is paging scheduling information for the reduced capability UE, or the second information is used to notify the reduced capability UE not to obtain the updated system information or indicate that there is no paging scheduling information for the reduced capability UE. For another example, the paging DCI includes a short message, and short message bits in the short message indicate that a SIB corresponding to the reduced capability UE changes, to indicate the reduced capability UE to obtain the updated system information. Alternatively, the short message bits indicate that the SIB corresponding to the reduced capability UE does not change, to indicate the reduced capability UE not to obtain the updated system information.

S605: The terminal device obtains the updated system information or reads content of a paging message.

For example, the terminal device is the reduced capability UE. If the terminal device successfully descrambles the first PDCCH by using the first P-RNTI, the terminal device determines that the paging DCI carried on the first PDCCH is sent to the reduced capability UE, and the terminal device obtains the updated system information or reads the content of the paging message; and/or if the terminal device determines that the received paging DCI is in the format corresponding to the reduced capability UE, the terminal determines that the paging DCI is sent to the reduced capability UE, and the terminal device obtains the updated system information or reads the content of the paging message; and/or the terminal device determines, based on the second information included in the paging DCI, to obtain the updated system information or read the content of the paging message; and/or if the short message bits in the paging DCI indicate that the SIB corresponding to the reduced capability UE changes, the terminal device obtains the updated system information. In this case, the NR legacy UE does not perform a step such as obtaining the updated system information or reading the content of the paging message, to reduce energy consumption in the paging process.

Generally, the terminal device receives the updated system information in a next change periodicity.

The paging process is described in FIG. 6 with reference to Manner 1 and Manner 2. The base station delivers two sets of paging configuration information. Different types of terminal devices may select and use one set of corresponding paging configuration information based on the types of the terminal devices. In addition, the base station indicates, in the paging DCI, a type of a terminal device to which the paging DCI is sent. The terminal device may determine earlier whether a subsequent paging message is related to the type of the terminal device, to selectively receive the subsequent paging message or selectively perform the action of obtaining updated system information or reading content of the paging message, so as to reduce unnecessary steps performed by the terminal device, thereby achieving an objective of energy saving. In addition, in FIG. 6, the base station further sets different paging cycles for the different types of terminal devices, so that a quantity of times that a terminal device of a specific type (for example, the reduced capability UE) is woken up can be reduced, to further reduce the energy consumption in the paging process.

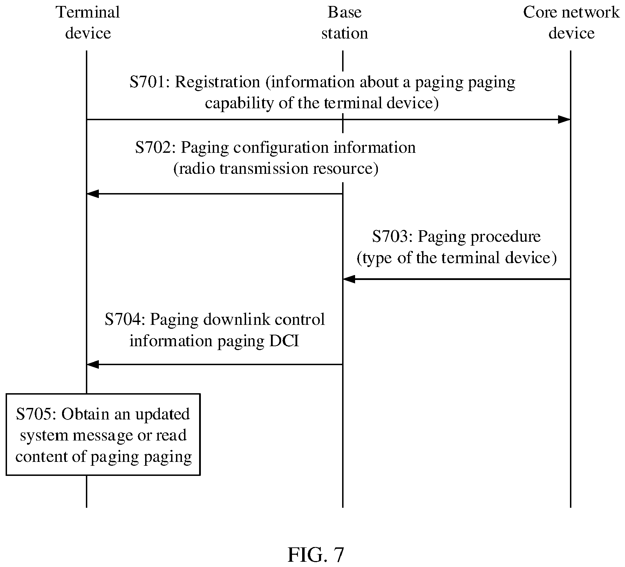

As shown in FIG. 7, Manner 3 is applied to a paging process, and the process includes the following steps.

For an execution process of S701, refer to S601. Details are not described herein again.

S702: A base station broadcasts paging configuration information, where the paging configuration information includes first paging configuration information corresponding to NR legacy UE and second paging configuration information corresponding to reduced capability UE. The terminal device receives the paging configuration information.

The first paging configuration information includes a radio transmission resource corresponding to the NR legacy UE, and the second paging configuration information includes a radio transmission resource corresponding to the reduced capability UE.

For an execution process of S703, refer to S603. Details are not described herein again.

S704: The base station sends paging DCI based on a radio transmission resource corresponding to the type of the terminal device. The terminal device receives the paging DCI based on the radio transmission resource corresponding to the type of the terminal device.

If the paging DCI is sent on the radio transmission resource corresponding to the terminal device whose type is the NR legacy UE, and the terminal device is the reduced capability UE, the terminal device does not receive the paging DCI on the radio transmission resource corresponding to the terminal device, and therefore does not perform a step such as obtaining updated system information and reading content of a paging message, to reduce energy consumption in the paging process.

The terminal device performs S705 only if the paging DCI is sent on the radio transmission resource corresponding to the terminal device whose type is the reduced capability UE, and the terminal device is the reduced capability UE. Alternatively, the terminal device performs S705 only if the type of the terminal device to which the paging DCI is sent is the NR legacy UE, and the terminal device is the NR legacy UE.

For an execution process of S705, refer to S605. Details are not described herein again.

The paging process is described in FIG. 7 by using Manner 3. The base station delivers two sets of paging configuration information, and the different paging configuration information indicates different radio transmission resources. In other words, the base station configures different search spaces, CORESETs, and/or P-RNTIs for different types of terminal devices. The different types of terminal devices may select and use one set of corresponding paging configuration information based on types of the terminal devices, to determine corresponding radio transmission resources. The terminal device monitors the paging DCI only on the radio transmission resource corresponding to the type of the terminal device, and does not detect the paging DCI on a radio transmission resource of another type of terminal device. Therefore, an unnecessary subsequent step performed by the terminal device is avoided, to achieve an objective of energy saving.

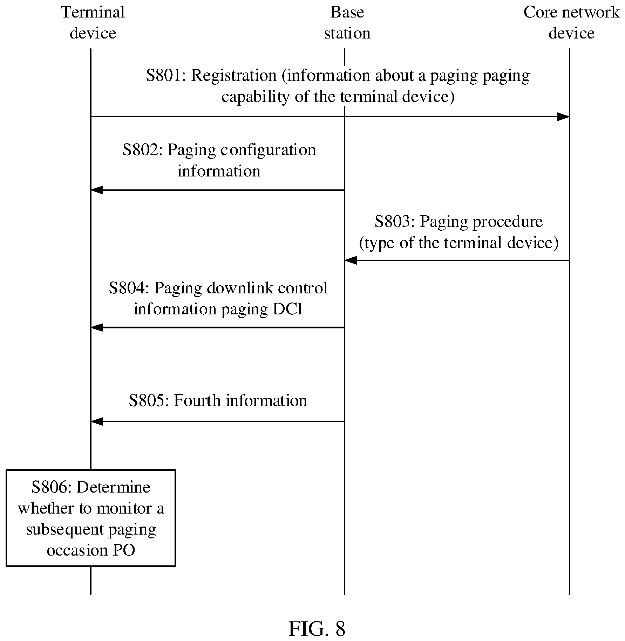

As shown in FIG. 8, Manner 4 is applied to a paging process, and the process includes the following steps.

For an execution process of S801, refer to S601. Details are not described herein again.

S802: A base station broadcasts paging configuration information, where the paging configuration information includes fifth information, and the fifth information is used to indicate a time-frequency resource corresponding to fourth information.

For an execution process of S803 and S804, refer to S603 and S604. Details are not described herein again.

S805: The base station sends the fourth information, where the fourth information is used to indicate that there is paging DCI on a subsequent PO, and the paging DCI is used to notify the NR legacy UE or the reduced capability UE to obtain updated system information or indicate that there is paging scheduling information for the NR legacy UE or the reduced capability UE.

Alternatively, the fourth information is used to indicate that there is paging DCI on a subsequent PO, and the paging DCI is used to notify the NR legacy UE or the reduced capability UE not to obtain the updated system information or indicate that there is no paging scheduling information for the NR legacy UE or the reduced capability UE.

S806: The terminal device determines, based on the fourth information, whether to monitor the subsequent PO.

For example, if the fourth information is used to indicate that there is the paging DCI on the subsequent PO, the paging DCI is used to notify the reduced capability UE to obtain the updated system information or indicate that there is the paging scheduling information for the reduced capability UE, and the terminal device is the reduced capability UE, the terminal device determines to monitor the subsequent PO, that is, monitor the paging DCI sent by the base station. If the terminal device is the NR legacy UE, the terminal device does not monitor the subsequent PO. If the fourth information is used to indicate that there is the paging DCI on the subsequent PO, the paging DCI is used to notify the NR legacy UE to obtain the updated system information or indicate that there is the paging scheduling information for the NR legacy UE, and the terminal device is the NR legacy UE, the terminal device determines to monitor the subsequent PO, that is, monitor the paging DCI sent by the base station. If the terminal device is the reduced capability UE, the terminal device does not monitor the subsequent PO.

The paging process is described in FIG. 8 by using Manner 4. The base station delivers the time-frequency resource corresponding to the fourth information and sends the fourth information on the time-frequency resource. The terminal device receives the fourth information on the time-frequency resource. The fourth information indicates the type of the terminal device to which the paging DCI on the subsequent PO is sent. The terminal device may determine earlier whether a subsequent paging message is related to the type of the terminal device, to selectively receive the subsequent paging message or selectively perform the action of obtaining the updated system information or reading the content of the paging message, so as to reduce unnecessary steps performed by the terminal device, thereby achieving an objective of energy saving.

In embodiments provided in this application, the methods provided in embodiments of this application are described from perspectives of the network device, the terminal device, and interaction between the terminal device and the network device. To implement the functions in the methods provided in embodiments of this application, the network device and the terminal device may each include a hardware structure and/or a software structure, and implement the functions in a form of the hardware structure, the software module, or a combination of the hardware structure and the software module. Whether a specific function in the foregoing functions is performed by using the hardware structure, the software module, or the combination of the hardware structure and the software module depends on a specific application and a design constraint of the technical solutions.

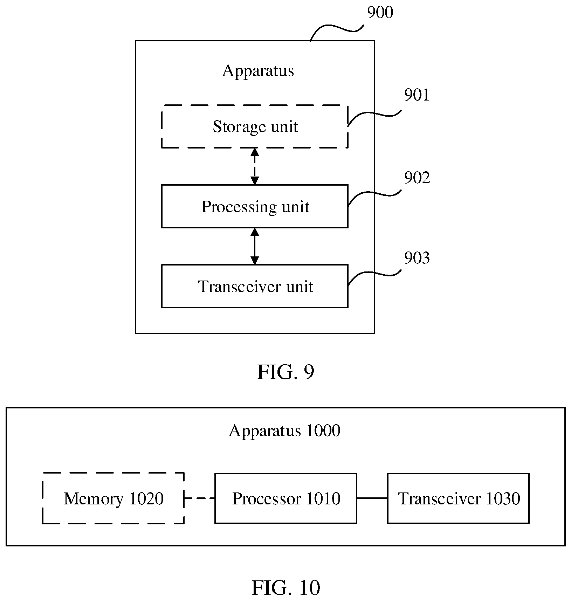

When an integrated unit (module) is used, FIG. 9 is a possible schematic block diagram of a paging apparatus according to an embodiment of this application. The apparatus 900 may exist in a form of software, hardware, or a combination of software and hardware. This is not limited in this embodiment of this application. The apparatus 900 may include a processing unit 902 and a transceiver unit 903.

In a possible design, the processing unit 902 is configured to implement a corresponding processing function. The transceiver unit 903 is configured to support communication between the apparatus 900 and another device. Optionally, the transceiver unit 903 may include a receiving unit and/or a sending unit, which are respectively configured to perform a receiving operation and a sending operation. Optionally, the apparatus 900 may further include a storage unit 901, configured to store program code and/or data of the apparatus 900.

The apparatus 900 may be configured to implement a function of the network device or the terminal device in any one of the foregoing embodiments. The processing unit 902 may support the apparatus 900 in performing actions of the network device or the terminal device in the foregoing method examples. Alternatively, the processing unit 902 mainly performs internal actions of the network device or the terminal device in the method examples, and the transceiver unit 903 may support communication between the apparatus 900 and another device.

In an embodiment, the apparatus 900 is used in a network device.

Specifically, the processing unit 902 is configured to determine first paging configuration information corresponding to a first-type terminal device and second paging configuration information corresponding to a second-type terminal device; and

the transceiver unit 903 is configured to send the first paging configuration information and the second paging configuration information.

A capability of the first-type terminal device is different from a capability of the second-type terminal device.

In a possible embodiment, a capability of a terminal device includes one or more of the following: a maximum transmission bandwidth, a transmission rate, reliability, delay tolerance, a quantity of antennas, or standby time.

In a possible embodiment, the transceiver unit 903 is further configured to send first paging paging downlink control information DCI. The first paging DCI includes an indication information set, the indication information set includes at least one piece of indication information, the at least one piece of indication information is used to identify whether a corresponding system information block SIB group changes, and a change of the SIB group includes a change of any SIB in the SIB group.

In a possible embodiment, the transceiver unit is further configured to send first information. The first information is used to indicate a SIB group corresponding to the second-type terminal device.

In a possible embodiment, the transceiver unit 903 is further configured to send second paging DCI. The second paging DCI includes second information, the second paging DCI corresponds to the second-type terminal device, and the second information is used to notify the second-type terminal device to obtain updated system information or indicate that there is paging scheduling information for the second-type terminal device.

In a possible embodiment, the second paging DCI is carried on a first physical downlink control channel PDCCH, the first PDCCH is scrambled by using a first paging radio network temporary identifier P-RNTI, and the first P-RNTI corresponds to the second-type terminal device; and/or a format of the second paging DCI corresponds to the second-type terminal device; and/or the second information is indicated by using a reserved field.

In a possible embodiment, the second paging configuration information further includes third information. The third information is used to indicate a radio transmission resource corresponding to a terminal device, and the radio transmission resource includes one or more of a time domain resource, a frequency domain resource, or a code domain resource.

In a possible embodiment, the radio transmission resource includes a search space Search Space, a control resource set CORESET, and/or a P-RNTI.

In a possible embodiment, the transceiver unit 903 is further configured to send third paging DCI based on a radio transmission resource corresponding to the second-type terminal device.

In a possible embodiment, the transceiver unit 903 is further configured to send fourth information. The fourth information is used to indicate that there is fourth paging DCI on a first paging occasion PO. The fourth paging DCI is used to notify the second-type terminal device to obtain the updated system information or indicate that there is the paging scheduling information for the second-type terminal device.

In a possible embodiment, the transceiver unit 903 is further configured to send fifth information. The fifth information is used to indicate some information related to the fourth information, for example, a time-frequency resource corresponding to the fourth information and/or one or more POs on which the terminal device monitors the paging DCI.

In another embodiment, the apparatus 900 is used in a terminal device.

Specifically, the transceiver unit 903 is configured to receive second paging configuration information; and the processing unit 902 is configured to determine that the second paging configuration information corresponds to a second-type terminal device.

The transceiver unit 903 is further configured to receive fifth paging paging downlink control information DCI based on the second paging configuration information.

In a possible embodiment, the fifth paging DCI includes an indication information set, the indication information set includes at least one piece of indication information, the at least one piece of indication information is used to identify whether a corresponding system information block SIB group changes, and a change of the SIB group includes a change of any SIB in the SIB group.

In a possible embodiment, the transceiver unit 903 is further configured to receive first information. The first information is used to indicate a SIB group corresponding to the second-type terminal device.

In a possible embodiment, the fifth paging DCI includes second information. The second paging DCI corresponds to the second-type terminal device. The second information is used to notify the second-type terminal device to obtain updated system information or indicate that there is paging scheduling information for the second-type terminal device.

In a possible embodiment, the fifth paging DCI is carried on a first physical downlink control channel PDCCH, the first PDCCH is scrambled by using a first paging radio network temporary identifier P-RNTI, and the first P-RNTI corresponds to the second-type terminal device; and/or a format of the fifth paging DCI corresponds to the second-type terminal device; and/or the fifth information is indicated by using a reserved field.

In a possible embodiment, the second paging configuration information further includes third information. The third information is used to indicate a radio transmission resource corresponding to a terminal device, and the radio transmission resource includes one or more of a time domain resource, a frequency domain resource, or a code domain resource.

In a possible embodiment, the radio transmission resource includes a search space Search Space, a control resource set CORESET, and/or a P-RNTI.

In a possible embodiment, the transceiver unit 903 is specifically configured to receive the fifth paging DCI based on a radio transmission resource corresponding to the second paging configuration information.

In a possible embodiment, the transceiver unit 903 is further configured to receive fourth information, where the fourth information is used to indicate that there is the fifth paging DCI on a first paging occasion PO, where the fifth paging DCI is used to notify the second-type terminal device to obtain the updated system information or indicate that there is the paging scheduling information for the second-type terminal device; and receive the fifth paging DCI on the first PO based on the second paging configuration information.

In a possible embodiment, the transceiver unit 903 is further configured to receive fifth information. The fifth information is used to indicate some information related to the fourth information, for example, a time-frequency resource corresponding to the fourth information and/or one or more POs on which the terminal device monitors the paging DCI.

In embodiments of this application, division into the units (modules) is an example, is merely logical function division, and may be other division during actual implementation. In addition, function units in embodiments of this application may be integrated into one unit or one processor, or may exist alone physically, or two or more units may be integrated into one unit. The integrated unit may be implemented in a form of hardware, may be implemented in a form of a software functional unit, or may be implemented in a form of hardware and software. This is not limited in this embodiment of this application. For example, the foregoing processing unit 902 may be implemented as a processor, the foregoing transceiver unit 903 may be implemented as a transceiver, a communication interface, or the like, and the storage unit 901 may be implemented as a memory.

As shown in FIG. 10, an embodiment of this application further provides a paging apparatus 1000, configured to implement a function of the network device or the terminal device in the foregoing embodiments. The apparatus 1000 includes a processor 1010 and a transceiver 1030. The apparatus 1000 may further include a memory 1020. In this embodiment of this application, the transceiver may be a transceiver, a bus, a bus interface, a pin, or another apparatus, circuit, or component that can implement a communication function. This is not limited in this embodiment of this application.

In a possible design, the processor 1010 may implement the function of the processing unit 902 in the foregoing embodiment, and the transceiver 1030 may implement the function of the transceiver unit 903 in the foregoing embodiment.

In a possible design, the memory 1020 stores instructions, a program, or data, and the memory 1020 may be configured to implement the function of the storage unit 901 in the foregoing embodiment. The processor 1010 is configured to read the instructions, the program, or the data stored in the memory 1020. When the instructions or the program stored in the memory 1020 is executed, the processor 1010 is configured to perform an operation performed by the processing unit 902 in the foregoing embodiment, and the transceiver 1030 is configured to perform an operation performed by the transceiver unit 903 in the foregoing embodiment.

It should be understood that the apparatus 900 or 1000 in this embodiment of this application may correspond to the network device or the terminal device in the paging method (FIG. 6 to FIG. 11) in embodiments of this application, and the operations and/or the functions of the modules in the apparatus 900 or 1000 are respectively used to implement corresponding procedures of the methods in FIG. 6 to FIG. 11. For brevity, details are not described herein again. The apparatus 900 or 1000 may be the network device or the terminal device, or may be another apparatus that can implement the function of the network device or the terminal device, for example, a chip system. The another apparatus may be mounted in the network device or the terminal device, or may be used with the network device or the terminal device.

An embodiment of this application further provides a paging apparatus. The paging apparatus may be a network device, a terminal device, or a circuit. The paging apparatus may be configured to perform actions performed by the network device or the terminal device in the foregoing method embodiments.

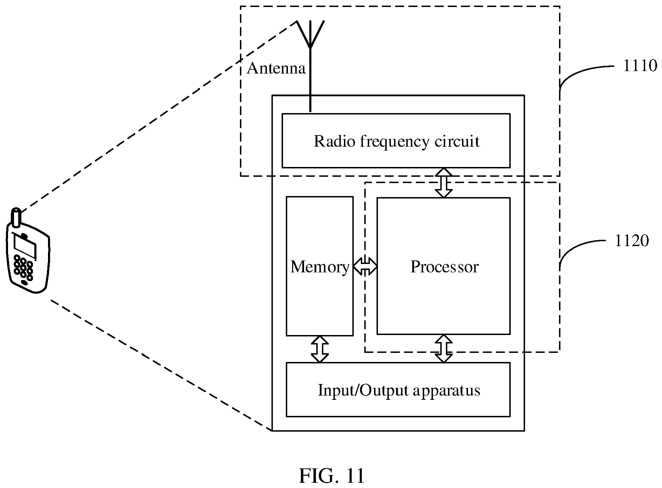

When the paging apparatus is the terminal device, FIG. 11 is a simplified schematic diagram of a structure of a terminal device. For ease of understanding and ease of illustration, an example in which the terminal device is a mobile phone is used in FIG. 11. As shown in FIG. 11, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, a keyboard, is mainly configured to: receive data by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data and processes the data. For ease of description, FIG. 11 shows only one memory and one processor. An actual terminal device product may include one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 11, the terminal device includes a transceiver unit 1110 and a processing unit 1120. The transceiver unit may also be referred to as a transceiver, a transceiver machine, a transceiver apparatus, a transceiver circuit, or the like. The processing unit may also be referred to as a processor, a processing board, a processing module, a processing apparatus, or the like. Optionally, a component that is in the transceiver unit 1110 and that is configured to implement a receiving function may be considered as a receiving unit, and a component that is in the transceiver unit 1110 and that is configured to implement a sending function may be considered as a sending unit. That is, the transceiver unit 1110 includes the receiving unit and the sending unit. The receiving unit sometimes may also be referred to as a receiver, a receiver, a receiver circuit, or the like. The sending unit sometimes may also be referred to as a transmitter, a transmitter, a transmitter circuit, or the like.

It should be understood that the transceiver unit 1110 is configured to perform a sending operation and a receiving operation on a terminal device side in the foregoing method embodiments, and the processing unit 1120 is configured to perform an operation other than the sending operation and the receiving operation of the terminal device in the foregoing method embodiments.

For example, in an implementation, the transceiver unit 1110 is configured to perform the receiving operation on the terminal device side in S201 in FIG. 2. The processing unit 1120 is configured to perform the processing operation on the terminal device side in S202 and S203 in FIG. 2; and/or the processing unit 1120 is further configured to perform other processing operations on the terminal device side in embodiments of this application.

When the paging apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

In another form of this embodiment, a computer-readable storage medium is provided. The computer-readable storage medium stores instructions. When the instructions are executed, the paging method in the foregoing method embodiments may be performed.

In another form of this embodiment, a computer program product including instructions is provided. When the instructions are executed, the paging method in the foregoing method embodiments may be performed.

EP 4 087 341 A1

In another form of this embodiment, a chip is provided. When the chip runs, the paging method in the foregoing method embodiments may be performed.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA), another programmable logic device, a transistor logic device, a hardware component, or any combination thereof; or may be a combination of processors implementing a computing function, for example, a combination of one or more microprocessors or a combination of a DSP and a microprocessor. The general-purpose processor may be a microprocessor, or the processor may be any conventional processor, or the like.

It may be understood that the memory or storage unit in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. For example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the system and the method described in this specification is intended to include, but not limited to, these memories and any memory of another proper type.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedure or functions according to embodiments of this application are all or partially implemented. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid-state drive, SSD).

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an EPROM, an EEPROM, a register, a hard disk drive, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be arranged in an ASIC, and the ASIC may be arranged in a terminal device. Optionally, the processor and the storage medium may also be arranged in different components of the terminal device.

These computer program instructions may alternatively be loaded onto the computer or the another programmable data processing device, so that a series of operation steps are performed on the computer or the another programmable device to generate computer-implemented processing, and instructions executed on the computer or the another programmable device provide steps for implementing a function specified in one or more procedures in the flowchart and/or one or more blocks in the block diagram.

Although embodiments of this application are described with reference to specific features, it is clear that various modifications and combinations may be made to them without departing from the spirit and scope of embodiments of this application. Correspondingly, the specification and the accompanying drawings are merely example descriptions of embodiments of this application that are defined by the appended claims, and are considered to cover any or all of modifications, variations, combinations, or equivalents in the scope of embodiments of this application.

**Claims**

1. A paging method, wherein the method is applicable to a network device, and comprises:

   sending first paging configuration information, wherein the first paging configuration information corresponds a first-type terminal device; and
   sending second paging configuration information, wherein the second paging configuration information corresponds to a second-type terminal device, wherein
   a capability of the first-type terminal device is different from a capability of the second-type terminal device.

2. The method according to claim 1, wherein a capability of a terminal device comprises one or more of the following: a maximum transmission bandwidth, a transmission rate, reliability, delay tolerance, a quantity of antennas, or standby time.

3. The method according to claim 1 or 2, wherein the method further comprises:
   sending first paging downlink control information DCI, wherein the first paging DCI comprises an indication information set, the indication information set comprises at least one piece of indication information, the at least one piece of indication information is used to identify whether a corresponding system information block SIB group changes, and a change of the SIB group comprises a change of any SIB in the SIB group.

4. The method according to claim 3, wherein the method further comprises:
   sending first information, wherein the first information is used to indicate a SIB group corresponding to the second-type terminal device.

5. The method according to any one of claims 1 to 4, wherein the method further comprises:
   sending second paging DCI, wherein the second paging DCI comprises second information, the second paging DCI corresponds to the second-type terminal device, and the second information is used to notify the second-type terminal device to obtain updated system information or indicate that there is paging scheduling information for the second-type terminal device.

6. The method according to claim 5, wherein the second paging DCI is carried on a first physical downlink control channel PDCCH, the first PDCCH is scrambled by using a first paging radio network temporary identifier P-RNTI, and the first P-RNTI corresponds to the second-type terminal device; and/or

   a format of the second paging DCI corresponds to the second-type terminal device; and/or
   the second information is indicated by using a reserved field.

7. The method according to any one of claims 1 to 6, wherein the second paging configuration information further comprises third information, the third information is used to indicate a radio transmission resource corresponding to a terminal device, and the radio transmission resource comprises one or more of a time domain resource, a frequency domain resource, or a code domain resource.

8. The method according to claim 7, wherein the radio transmission resource comprises:
   a search space Search Space, a control resource set CORESET, and/or a P-RNTI.

9. The method according to claim 7 or 8, wherein the method further comprises:
   sending third paging DCI based on a radio transmission resource corresponding to the second-type terminal device.

10. The method according to any one of claims 1 to 9, wherein the method further comprises:
    sending fourth information, wherein the fourth information is used to indicate that there is fourth paging DCI on a first paging occasion PO, and the fourth paging DCI is used to notify the second-type terminal device to obtain the updated system information or indicate that there is the paging scheduling information for the second-type terminal

EP 4 087 341 A1

device.

11. A paging method, wherein the method is applicable to a second-type terminal device, and comprises:

receiving second paging configuration information, wherein the second paging configuration information corresponds to the second-type terminal device; and
receiving fifth paging downlink control information DCI based on the second paging configuration information.

12. The method according to claim 11, wherein the fifth paging DCI comprises an indication information set, the indication information set comprises at least one piece of indication information, the at least one piece of indication information is used to identify whether a corresponding system information block SIB group changes, and a change of the SIB group comprises a change of any SIB in the SIB group.

13. The method according to claim 12, wherein the method further comprises:
receiving first information, wherein the first information is used to indicate a SIB group corresponding to the second-type terminal device.

14. The method according to any one of claims 11 to 13, wherein the fifth paging DCI comprises second information, the second paging DCI corresponds to the second-type terminal device, and the second information is used to notify the second-type terminal device to obtain updated system information or indicate that there is paging scheduling information for the second-type terminal device.

15. The method according to claim 14, wherein the fifth paging DCI is carried on a first physical downlink control channel PDCCH, the first PDCCH is scrambled by using a first paging radio network temporary identifier P-RNTI, and the first P-RNTI corresponds to the second-type terminal device; and/or

a format of the fifth paging DCI corresponds to the second-type terminal device; and/or
the fifth information is indicated by using a reserved field.

16. The method according to any one of claims 11 to 15, wherein the second paging configuration information further comprises third information, the third information is used to indicate a radio transmission resource corresponding to a terminal device, and the radio transmission resource comprises one or more of a time domain resource, a frequency domain resource, or a code domain resource.

17. The method according to claim 16, wherein the radio transmission resource comprises:
a search space Search Space, a control resource set CORESET, and/or a P-RNTI.

18. The method according to claim 16 or 17, wherein the receiving fifth paging DCI based on the second paging configuration information comprises:
receiving the fifth paging DCI based on a radio transmission resource corresponding to the second paging configuration information.

19. The method according to any one of claims 11 to 18, wherein the method further comprises:

receiving fourth information, wherein the fourth information is used to indicate that there is the fifth paging DCI on a first paging occasion PO, and the fifth paging DCI is used to notify the second-type terminal device to obtain the updated system information or indicate that there is the paging scheduling information for the second-type terminal device; and
the receiving fifth paging DCI based on the second paging configuration information comprises:
receiving the fifth paging DCI on the first PO based on the second paging configuration information.

20. A paging apparatus, comprising:

a processing unit, configured to determine first paging configuration information corresponding to a first-type terminal device and second paging configuration information corresponding to a second-type terminal device; and
a transceiver unit, configured to send the first paging configuration information and the second paging configuration information, wherein

27

a capability of the first-type terminal device is different from a capability of the second-type terminal device.

21. The apparatus according to claim 20, wherein a capability of a terminal device comprises one or more of the following: a maximum transmission bandwidth, a transmission rate, reliability, delay tolerance, a quantity of antennas, or standby time.

22. The apparatus according to claim 20 or 21, wherein the transceiver unit is further configured to send first paging downlink control information DCI, wherein the first paging DCI comprises an indication information set, the indication information set comprises at least one piece of indication information, the at least one piece of indication information is used to identify whether a corresponding system information block SIB group changes, and a change of the SIB group comprises a change of any SIB in the SIB group.

23. The apparatus according to claim 22, wherein the transceiver unit is further configured to send first information, wherein the first information is used to indicate a SIB group corresponding to the second-type terminal device.

24. The apparatus according to any one of claims 20 to 23, wherein the transceiver unit is further configured to send second paging DCI, wherein the second paging DCI comprises second information, the second paging DCI corresponds to the second-type terminal device, and the second information is used to notify the second-type terminal device to obtain updated system information or indicate that there is paging scheduling information for the second-type terminal device.

25. The apparatus according to claim 24, wherein the second paging DCI is carried on a first physical downlink control channel PDCCH, the first PDCCH is scrambled by using a first paging radio network temporary identifier P-RNTI, and the first P-RNTI corresponds to the second-type terminal device; and/or

   a format of the second paging DCI corresponds to the second-type terminal device; and/or
   the second information is indicated by using a reserved field.

26. The apparatus according to any one of claims 20 to 25, wherein the second paging configuration information further comprises third information, the third information is used to indicate a radio transmission resource corresponding to a terminal device, and the radio transmission resource comprises one or more of a time domain resource, a frequency domain resource, or a code domain resource.

27. The apparatus according to claim 26, wherein the radio transmission resource comprises:
   a search space Search Space, a control resource set CORESET, and/or a P-RNTI.

28. The apparatus according to claim 26 or 27, wherein the transceiver unit is further configured to send third paging DCI based on a radio transmission resource corresponding to the second-type terminal device.

29. The apparatus according to any one of claims 20 to 28, wherein the transceiver unit is further configured to send fourth information, wherein the fourth information is used to indicate that there is fourth paging DCI on a first paging occasion PO, and the fourth paging DCI is used to notify the second-type terminal device to obtain the updated system information or indicate that there is the paging scheduling information for the second-type terminal device.

30. A paging apparatus, comprising:

   a transceiver unit, configured to receive second paging configuration information; and
   a processing unit, configured to determine that the second paging configuration information corresponds to a second-type terminal device, wherein
   the transceiver unit is further configured to receive fifth paging downlink control information DCI based on the second paging configuration information.

31. The apparatus according to claim 30, wherein the fifth paging DCI comprises an indication information set, the indication information set comprises at least one piece of indication information, the at least one piece of indication information is used to identify whether a corresponding system information block SIB group changes, and a change of the SIB group comprises a change of any SIB in the SIB group.

32. The apparatus according to claim 31, wherein the transceiver unit is further configured to receive first information, wherein the first information is used to indicate a SIB group corresponding to the second-type terminal device.

33. The apparatus according to any one of claims 30 to 32, wherein the fifth paging DCI comprises second information, the second paging DCI corresponds to the second-type terminal device, and the second information is used to notify the second-type terminal device to obtain updated system information or indicate that there is paging scheduling information for the second-type terminal device.

34. The apparatus according to claim 33, wherein the fifth paging DCI is carried on a first physical downlink control channel PDCCH, the first PDCCH is scrambled by using a first paging radio network temporary identifier P-RNTI, and the first P-RNTI corresponds to the second-type terminal device; and/or

a format of the fifth paging DCI corresponds to the second-type terminal device; and/or
the fifth information is indicated by using a reserved field.

35. The apparatus according to any one of claims 30 to 34, wherein the second paging configuration information further comprises third information, the third information is used to indicate a radio transmission resource corresponding to a terminal device, and the radio transmission resource comprises one or more of a time domain resource, a frequency domain resource, or a code domain resource.

36. The apparatus according to claim 35, wherein the radio transmission resource comprises:
a search space Search Space, a control resource set CORESET, and/or a P-RNTI.

37. The apparatus according to claim 35 or 36, wherein the transceiver unit is specifically configured to receive the fifth paging DCI based on a radio transmission resource corresponding to the second paging configuration information.

38. The apparatus according to any one of claims 30 to 37, wherein the transceiver unit is further configured to receive fourth information, wherein the fourth information is used to indicate that there is the fifth paging DCI on a first paging occasion PO, and the fifth paging DCI is used to notify the second-type terminal device to obtain the updated system information or indicate that there is the paging scheduling information for the second-type terminal device; and receive the fifth paging DCI on the first PO based on the second paging configuration information.

39. A computer-readable storage medium, wherein the computer-readable storage medium comprises a computer program, and when the computer program is read and executed by one or more processors, the method according to any one of claims 1 to 10 or the method according to any one of claims 11 to 19 is implemented.

40. A chip, wherein when running, the chip implements the method according to any one of claims 1 to 10 or the method according to any one of claims 11 to 19.

FIG. 1

FIG. 2

Network device      First-type terminal device      Second-type terminal device

S301: First paging configuration information

S302: Second paging configuration information

S303: Paging downlink control information paging DCI

Paging downlink control information paging DCI

FIG. 3

First-type terminal device Paging cycle of 320 milliseconds

Second-type terminal device Paging cycle of 640 milliseconds

FIG. 4

A: A first-type terminal device and a second-type terminal device use different CORESET configurations and different search space configurations

B: A first-type terminal device and a second-type terminal device use a same CORESET configuration and different search space configurations

C: A first-type terminal device and a second-type terminal device use different CORESET configurations

D: A first-type terminal device and a second-type terminal device use different CORESET configurations

Search Space: Search space   CORESET: Control resource set

FIG. 5

Terminal
device

Base
station

Core network
device

S601: Registration (information about a paging paging
capability of the terminal device)

S602: Paging configuration
information

S603: Paging procedure
(type of the terminal device)

S604: Paging downlink control
information paging DCI

S605: Obtain an updated
system message or read
content of paging paging

FIG. 6

| Terminal device | Base station | Core network device |
| --- | --- | --- |

S701: Registration (information about a paging paging capability of the terminal device)

S702: Paging configuration information (radio transmission resource)

S703: Paging procedure (type of the terminal device)

S704: Paging downlink control information paging DCI

S705: Obtain an updated system message or read content of paging paging

FIG. 7

| Terminal device | Base station | Core network device |
|---|---|---|

S801: Registration (information about a paging paging capability of the terminal device)

S802: Paging configuration information

S803: Paging procedure (type of the terminal device)

S804: Paging downlink control information paging DCI

S805: Fourth information

S806: Determine whether to monitor a subsequent paging occasion PO

FIG. 8

900

Apparatus

Storage unit — 901

Processing unit — 902

Transceiver unit — 903

FIG. 9

Apparatus 1000

Memory 1020 — Processor 1010 — Transceiver 1030

FIG. 10

FIG. 11

## INTERNATIONAL SEARCH REPORT

| International application No. |
|---|
| **PCT/CN2020/074648** |

| A. | CLASSIFICATION OF SUBJECT MATTER |
|---|---|

H04W 68/00(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 寻呼 配置 类型 终端 能力 不同 时延 容忍 指示 系统信息 paging configuration type UE capabilit+ different delay indicator system information SI DCI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2019148493 A1 (GUANGDONG OPPO MOBILE TELECOMMUNICATIONS CORP., LTD.) 08 August 2019 (2019-08-08)<br>description page 3 paragraph 1- page 8 last paragraph | 1-2,11,20-21,30,39-40 |
| A | US 2015237577 A1 (HUAWEI TECHNOLOGIES CO., LTD.) 20 August 2015 (2015-08-20)<br>entire document | 1-40 |
| A | CN 108574938 A (RESEARCH INSTITUTE OF CHINA MOBILE COMMUNICATIONS CORPORATION et al.) 25 September 2018 (2018-09-25)<br>entire document | 1-40 |
| A | CN 106961729 A (ZTE CORPORATION) 18 July 2017 (2017-07-18)<br>entire document | 1-40 |
| A | MEDIATEK INC. "3GPP TSG RAN Meeting #86 RP-193239"<br>*New WID: UE Power Saving Enhancements*, 12 December 2019 (2019-12-12),<br>entire document | 1-40 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 October 2020** | **12 November 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/074648**

| Patent document<br>cited in search report | | | Publication date<br>(day/month/year) | Patent family member(s) | | | Publication date<br>(day/month/year) |
|---|---|---|---|---|---|---|---|
| WO | 2019148493 | A1 | 08 August 2019 | None | | | |
| US | 2015237577 | A1 | 20 August 2015 | CN | 104012155 | A | 27 August 2014 |
| | | | | CN | 104012155 | B | 22 December 2017 |
| | | | | WO | 2014071551 | A1 | 15 May 2014 |
| | | | | US | 9668211 | B2 | 30 May 2017 |
| CN | 108574938 | A | 25 September 2018 | None | | | |
| CN | 106961729 | A | 18 July 2017 | None | | | |

Form PCT/ISA/210 (patent family annex) (January 2015)